# EUROPÄISCHE PATENTSCHRIFT

(11) **EP 1 516 025 B1**
(45) Veröffentlichungstag und Bekanntmachung des Hinweises auf die Patenterteilung: **24.08.2016**
(21) Anmeldenummer: 03735539.3
(22) Anmeldetag: 04.06.2003
(51) Int. Cl.: C09D 175/16, C08G 18/08, C08G 18/67, C08G 18/80

(54) **STRAHLENHÄRTENDE BESCHICHTUNGSMITTEL**
RADIATION-CURED COATING AGENT
PRODUIT DE REVETEMENT RADIODURCISSABLE

(30) Priorität: 17.06.2002 DE 10226932
(43) Veröffentlichungstag der Anmeldung: 23.03.2005
(73) Patentinhaber: Covestro Deutschland AG, 51373 Leverkusen (DE)
(72) Erfinder: WEIKARD, Jan, 51519 Odenthal (DE); LÜHMANN, Erhard, 29699 Bomlitz (DE); IRLE, Christoph, E-08037 Barcelona (ES); RISCHE, Thorsten, 59423 Unna (DE); NAUJOKS, Karin, 51519 Odenthal (DE); FELLER, Thomas, 42659 Solingen (DE); MAZANEK, Jan, 51061 Köln (DE)
(74) Vertreter: Levpat
(86) Internationale Anmeldenummer: PCT/EP2003/005825
(87) Internationale Veröffentlichungsnummer: WO 2003/106577

(56) Entgegenhaltungen:
- EP-A- 0 952 170
- EP-A2- 0 916 647
- WO-A1-02/079290
- DE-A- 19 736 083
- DE-A- 19 855 146
- DE-A1- 4 021 126

## Beschreibung

Die Erfindung betrifft wässrige Beschichtungsmittel auf Basis von Polyurethan-Dispersionen, die unter dem Einfluss energiereicher Strahlung aushärten, ein Verfahren zu deren Herstellung und Verwendung.

Aus dem Stand der Technik sind wässrige Einkomponenten-(1K)-Beschichtungsmittel bekannt, die ein Bindemittel mit aktiven H-Atomen und einen Vernetzer enthalten und bei denen es durch thermische Aktivierung zur Vernetzung und Aushärtung kommt. Nachteilig an diesen Systemen ist jedoch, dass die Aushärtung langsam verläuft und hohe Temperaturen benötigt werden.

Ebenfalls bekannt sind wässrige Beschichtungsmittel, die physikalisch aushärten, was einer Härtung der Schicht durch Verfilmung entspricht. Üblicherweise werden in solchen Systemen keine Vernetzungsmittel eingesetzt. Die physikalische Härtung kann durch chemische Vernetzung mittels Luftsauerstoff unterstützt werden.

Wesentlich schneller härten Beschichtungen auf Basis von strahlungshärtbaren, dass heißt polymerisierbaren Gruppen enthaltende Polyurethan-Dispersionen. Solche Dispersionen werden z.B. in der EP-A 0 942 022 beschrieben. Nachteilig ist hier, dass die strahlungshärtbaren Beschichtungen nur dann vollständig härten, wenn sie mit einer bestimmten Dosis und Intensität, z.B. mit UV-Licht bestrahlt werden. Will man Objekte mit komplizierter Geometrie beschichten, so ist es z.B. in Schattenbereichen problematisch ein hohes Maß an chemischer und physikalischer Resistenz der Beschichtung zu erzeugen.

Die WO-A 00/59978 offenbart ein thermisch und/oder mit aktinischer Strahlung härtbaren wässrigen Beschichtungsstoff, der ein Polyurethan mit aktiven H-Atomen auf Basis von Bis(4-isocyanatocyclohexyl)methan eines trans/trans-Gehalts von bis zu 30 Gew.-%, bezogen auf das Diisocyanat, als Bindemittel und mindestens ein Vernetzungsmittel enthält. Ungesättigte Gruppen werden dabei durch niedermolekulare, isocyanatreaktive Verbindungen wie Trimethylolpropan-monoacrylat lateral oder endständig in das Polyurethan eingeführt. Nachteilig ist dabei die Verwendung von monomeren ungesättigten Bausteinen, die als monofunktionelle Bausteine das Molekulargewicht des Polyurethans beschränken oder als reine difunktionelle Moleküle, z.B. Trimethylolpropanmonoacrylat sehr teuer sind.

In der EP-A 0 952 170 wird ein Beschichtungssystem beschrieben, welches ein Urethan(meth)acrylat mit freien NCO-Gruppen, einen Photoinitiator und ein ein oder mehrere aktive Wasserstoffatome enthaltendes wässriges Bindemittel enthält. Die Aushärtung dieses Systems kombiniert sowohl die Vernetzung über die Reaktion der Isocyanat-Gruppen mit den aktiven Wasserstoffatomen des Bindemittels, als auch die UV-Härtung über die Urethan(meth)acrylate. Nachteilig ist hier die geringere UV-Reaktivität aufgrund geringer Doppelbindungsdichte sowie eine schlechtere physikalische Antrocknung vor der UV-Härtung aufgrund geringerer Molekülmasse der Urethanmethacrylats.

Aufgabe der vorliegenden Erfindung bestand in der Bereitstellung wässriger UVhärtender Polyurethandispersionen, die über einen schnellen Aushärtungsmechanismus verfügen und es dabei ermöglichen Bereiche, die schlecht belichtbar sind, ausreichend zu vernetzen.

Es wurde gefunden, dass wässrige UV-härtende Polyurethandispersionen mit polymerisierbaren Gruppen, die wenig oder keine aktiven Wasserstoffatome enthalten, mit Polyisocyanaten nachvernetzt werden können. Dabei kann die erfindungsgemäße Polyurethan-Dispersion sowohl als Zweikomponenten-(2K)- als auch als Einkomponenten-(1K)-System vorliegen. Im Falle des 1K-Systems liegen die Isocyanate neben dem Bindemittel vor und werden deshalb bevorzugt blockiert eingesetzt. Die erfindungsgemäßen Bindemittel zeigen eine bessere Haftung als reine UV-Bindemittel, eine höhere Reaktivität als Nicht-UV-Systeme und weisen eine bessere Beständigkeiten gegen färbende Flüssigkeiten auf.

Gegenstand der Erfindung sind wässrige Beschichtungsmittel enthaltend
(I) mindestens ein Polyisocyanat (A), dadurch gekennzeichnet, dass das Polyisocyanat (A) ein unblockiertes hydrophil modifiziertes Polyisocyanat (A') oder ein blockiertes Polyisocyanat (A") ist,
(II) mindestens eine radikalisch polymerisierbare Gruppen enthaltendes Polyurethan (B) mit einem Gehalt an Zerewitinoff-aktiven Wasserstoff-Atomen enthaltenden Gruppen von 0 bis 0,53 mmol/g, bevorzugt 0 bis 0,4 mmol/g, besonders bevorzugt von 0 bis 0,25 mmol/g, dadurch gekennzeichnet, dass das Polyurethan (B) ein Reaktionsprodukt aus
   (a) einem oder mehreren Polyisocyanaten,
   (b1) einer oder mehreren hydrophilierend wirkenden Verbindungen mit ionischen und/oder in ionische Gruppen überführbaren Gruppen, ausgewählt aus der Gruppe bestehend aus Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und ihren Salzen, einem Additionsprodukt von Isophorondiamin und Acrylsäure und dessen Alkali- und/oder Ammoniumsalzen, dem Addukt von Natriumbisulfit an Buten-2-diol-1,4-Polyethersulfonat, dem propoxylierten Addukt aus 2-Butendiol und NaHSO₃, sowie in kationische Gruppen überführbaren Bausteinen wie N-Methyldiethanolamin, und/oder nichtionischen Gruppen, wobei die nichtionisch hydrophilierend wirkenden Verbindungen Polyethergruppen und Isocyanatreaktive Gruppen enthalten,
   (b2) einer oder mehrerer Verbindungen mit radikalisch polymersierbaren Gruppen,
   (b3) gegebenenfalls einer oder mehrer Polyolverbindungen mit einem mittleren Molekulargewicht von 50 bis 500 und einer Hydroxylfunkionalität größer oder gleich 2 und kleiner oder gleich 3,
   (b4) gegebenenfalls einer oder mehrerer Polyolverbindungen mit einem mittleren Molekulargewicht von 500 bis 13000 g/mol mit einer mittleren Hydroxylfunktionaltät von 1,5 bis 2,5 und
   (b5) gegebenenfalls einem oder mehreren Di- oder Polyaminen ist,
(III) einen Initiator (C), der eine radikalische Polymerisation auslösen kann.

Im Sinne der vorliegenden Erfindung sind Gruppen mit Zerewitinoff-aktiven H-Atomen Hydroxyl-, primäre oder sekundäre Amin- oder Thiolgruppen.

Das Polyisocyanat (A) des erfindungsgemäßen Beschichtungsmittels kann als unblockiertes Polyisocyanat (A') oder blockiertes Polyisocyanat (A") eingesetzt werden.

Erfindungsgemäß liegen die Polyurethane als wässrige Polyurethan-Dispersionen, Emulsionen oder Lösungen vor, die durch Polyaddition von Di- oder Polyisocyanaten (Komponente (a)) mit gegenüber Isocyanaten reaktiven Verbindungen (Komponente (b1) bis (b5)) hergestellt werden.

Geeignete Polyisocyanate (a) sind aromatische, araliphatische, aliphatische oder cycloaliphatische Polyisocyanate. Es können auch Mischungen solcher Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)-methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4-und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben. Bevorzugt sind Hexamethylendiisocyanat, Isophorondiisocyanat und die isomeren Bis(4,4'-isocyanatocyclohexyl)methane sowie deren Mischungen.

Das in den erfindungsgemäßen wässrigen Beschichtungsmitteln enthaltende Polyurethan (B) ist ein Reaktionsprodukt aus
(a) ein oder mehrere Polyisocyanate
(b1) ein oder mehrere hydrophilierend wirkende Verbindungen mit ionischen und/oder in ionische Gruppen überführbare Gruppen und/oder nichtionischen Gruppen,
(b2) ein oder mehrere Verbindungen mit radikalisch polymerisierbaren Gruppen,
(b3) gegebenenfalls ein oder mehrere Polyolverbindungen mit einem mittleren Molekulargewicht von 50 bis 500, bevorzugt 80 bis 200 und einer Hydroxylfunktionalität größer oder gleich 2 und kleiner oder gleich 3,
(b4) gegebenenfalls ein oder mehrere Polyolverbindungen mit einem mittleren Molekulargewicht von 500 bis 13000 g/mol, bevorzugt 700 bis 4000 g/mol mit einer mittleren Hydroxylfunktionalität von 1,5 bis 2,5, bevorzugt von 1,8 bis 2,2, besonders bevorzugt von 1,9 bis 2,1,
(b5) gegebenenfalls ein oder mehrere Di- oder Polyamine.

Die Komponente (b1) enthält ionische Gruppen, die entweder kationischer oder anionischer Natur sein können und/oder nichtionische hydrophile Gruppen. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen (b1) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze, wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyloder Butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDA und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyldiethanolamin als hydrophile Aufbaukomponenten. Bevorzugte ionische oder potentiell ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDA und Acrylsäure (EP-A 0 916 647, Beispiel 1) sowie der Dimethylolpropionsäure.

Geeignete nichtionisch hydrophilierend wirkende Verbindungen sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 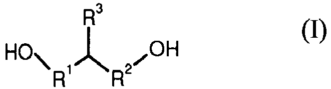 in welcher
R¹ und R² unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
R³ für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-%, aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Die Komponente (b1) ist bevorzugt eine Kombination aus nichtionischen und ionischen Hydrophilierungsmitteln. Besonders bevorzugt sind Kombinationen aus nichtionischen und anionischen Hydrophilierungsmitteln.

Die Komponente (b2) enthält radikalisch polymerisierbare Doppelbindungen, bevorzugt hydroxyfunktionelle Acrylate oder Methacrylate. Beispiele sind 2-Hydroxyethyl(meth)acrylat, Polyethylenoxid-mono(meth)acrylate, Polypropylenoxidmono-(meth)acrylate, Polyalkylenoxidmono(meth)acrylate, Poly(s-caprolacton)mono-(meth)acrylate, wie z.B. Tone^{®} M100 (Union Carbide, USA), 2-Hydroxypropyl-(meth)acrylat, 4-Hydroxybutyl(meth)acrylat, 3-Hydroxy-2,2-dimethylpropyl(meth)-acrylat, die Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische. Bevorzugt sind die acrylierten Monoalkohole. Geeignet sind auch Alkohole, die sich aus der Umsetzung von doppelbindungshaltigen Säuren mit gegebenenfalls doppelbindungshaltigen, monomeren Epoxidverbindungen erhalten lassen, so zum z.B. die Umsetzungsprodukte von (Meth)acrylsäure mit Glycidyl-(meth)acrylat oder dem Glycidylester der Versaticsäure.

Weiterhin können Isocyanat-reaktive oligomere oder polymere ungesättigte Acrylat- und/oder Methacrylatgruppen enthaltende Verbindungen alleine oder in Kombination mit den vorgenannten monomeren Verbindungen eingesetzt werden. Bevorzugt werden als Komponente (b2) hydroxylgruppenhaltige Polyesteracrylate mit einem OH-Gehalt von 30 bis 300 mg KOH/g, bevorzugt 60 bis 200, besonders bevorzugt 70 bis 120 eingesetzt. Bei der Herstellung der hydroxyfunktionellen Polyesteracrylate können insgesamt 7 Gruppen von Monomerbestandteilen zur Anwendung kommen:
1. (Cyclo)Alkandiole wie zweiwertige Alkohole mit (cyclo)aliphatisch gebundenen Hydroxylgruppen des Molekulargewichtsbereichs 62 bis 286, z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem Molekulargewicht von 200 bis 4000, bevorzugt 300 bis 2000, besonders bevorzugt 450 bis 1200. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs 92 bis 254, wie z.B. Glycerin, Trimethylolpropan, Pentaerythrit, Dipentaerythrit und Sorbit oder auf diesen Alkoholen gestartete Polyether wie z.B. das Umsetzungsprodukt von 1 mol Trimethylolpropan mit 4 mol Ethylenoxid.
3. Monoalkohole wie z. B. Ethanol, 1- und 2-Propanol, 1- und 2-Butanol, 1-Hexanol, 2-Ethylhexanol, Cyclohexanol und Benzylalkohol.
4. Dicarbonsäuren des Molekulargewichtsbereichs 104 bis 600 und/oder deren Anhydride, wie z.B. Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren bzw. deren Anhydride wie z.B. Trimellithsäure und Trimellithsäureanhydrid.
6. Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.
7th Acrylsäure, Methacrylsäure bzw. dimere Acrylsäure.

Geeignete hydroxylgruppenhaltige Polyesteracrylate enthalten das Umsetzungsprodukt von mindestens einem Bestandteil aus Gruppe 1 oder 2 mit mindestens einem Bestandteil aus Gruppe 4 oder 5 und mindestens einem Bestandteil aus Gruppe 7.

Gegebenenfalls können in diese Polyesteracrylate auch aus dem Stand der Technik allgemein bekannte, dispergierend wirkende Gruppen eingebaut werden. So können als Alkoholkomponente anteilig Polyethylenglykole und/oder Methoxypolyethylenglykole mitverwendet werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol-1500- und/oder Polyethylenglykol-500-mono-methylether.

Weiterhin ist es möglich, nach der Veresterung einen Teil von Carboxylgruppen, insbesondere die der (Meth)acrylsäure, mit Mono-, Di- oder Polyepoxiden umzusetzen. Bevorzugt sind beispielsweise die Epoxide (Glycidylether) von monomeren, oligomeren oder polymeren Bisphenol-A, Bisphenol-F, Hexandiol und/oder Butandiol oder deren ethoxilierten und/oder propoxilierten Derivaten. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g. Die Reaktion wird bevorzugt durch Katalysatoren wie Triphenyphosphin, Thiodiglykol, Ammonium- und/oder Phosphoniumhalogeniden und/oder Zirkon- oder Zinnverbindungen wie Zinn(II)ethylhexanoat katalysiert.

Die Herstellung von Polyesteracrylaten wird in der DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 -135 beschrieben.

Ebenfalls bevorzugt als Komponente (b2) sind die an sich bekannten hydroxylgruppenhaltigen Epoxy(meth)acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S. 37 -56 beschrieben. Hydroxylgruppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Geeignete niedermolekulare Polyole (b3) sind kurzkettige, d.h. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Geeignete höhermolekulare Polyole (b4) sind Di- oder Polyole mit einem zahlenmittleren Molekulargewicht im Bereich von 500 bis 13000 g/mol, bevorzugt 700 bis 4000 g/mol. Bevorzugt werden Polymere mit einer mittleren Hydroxylfunktionalität von 1,5 bis 2,5, bevorzugt von 1,8 bis 2,2, besonders bevorzugt von 1,9 bis 2,1. Dazu zählen z.B. Polyesteralkohole auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis. Bevorzugte Polyesteralkohole sind z.B. Umsetzungsprodukte von Adipinsäure mit Hexandiol, Butandiol oder Neopentylglykol oder Mischungen der genannten Diole des Molekulargewichts von 500 bis 4000, besonders bevorzugt 800 bis 2500. Ebenfalls geeignet sind Polyetherole, die durch Polymerisation von cyclischen Ethern oder durch Umsetzung von Alkylenoxiden mit einem Startermolekül erhältlich sind. Beispielhaft seien genannt die Polyethylen- und/oder Polypropylenglykole eines mittleren Molekulargewichts von 500 bis 13000, weiterhin Polytetrahydrofurane eines mittleren Molekulargewichts von 500 bis 8000, bevorzugt von 800 bis 3000. Ebenfalls geeignet sind hydroxyl-terminierte Polycarbonate, die durch Umsetzung von Diolen oder auch Lacton-modifizierten Diolen oder auch Bisphenolen, wie z.B. Bisphenol A, mit Phosgen oder Kohlensäurediestern wie Diphenylcarbonat oder Dimethylcarbonat zugänglich sind. Beispielhaft seien genannt die polymeren Carbonate des 1,6-Hexandiols eines mittleren Molekulargewichts von 500 bis 8000, sowie die Carbonate von Umsetzungsprodukten des 1,6-Hexandiols mit ε-Caprolacton im molaren Verhältnis von 1 bis 0,1. Bevorzugt sind vorgenannte Polycarbonatdiole eines mittleren Molekulargewichts von 800 bis 3000 auf Basis 1,6-Hexandiol und/oder Carbonate von Umsetzungsprodukten des 1,6-Hexandiols mit ε-Caprolacton im molaren Verhältnis von 1 bis 0,33. Hydroxyl-terminierte Polyamidalkohole und Hydroxyl-terminierte Polyacrylatdiole, z.B. Tegomer^{®} BD 1000 (Fa. Tego GmbH, Essen, DE) sind ebenfalls einsetzbar.

Die Komponente (b5) ist ausgewählt aus der Gruppe der Di- und/oder Polyamine, die zum Erhöhen der Molmasse eingesetzt werden und bevorzugt gegen Ende der Polyadditionsreaktion zugegeben werden. Bevorzugt findet diese Reaktion im wässrigen Medium statt. Dann müssen die Di- und/oder Polyamine reaktiver als Wasser gegenüber den Isocyanatgruppen der Komponente (a) sein. Exemplarisch seien genannt Ethylendiamin, 1,3-Propylendiamin, 1,6-Hexamethylendiamin, Isophorondiamin, 1,3-, 1,4-Phenylendiamin, 4,4'-Diphenylmethandiamin, aminofunktionelle Polyethylenoxide oder Polypropylenoxide, die unter dem Namen Jeffamin^{®}, D-Reihe (Fa. Huntsman Corp. Europe, Belgien) erhältlich sind, Diethylentriamin, Triethylentetramin und Hydrazin. Bevorzugt sind Isophorondiamin, Ethylendiamin, 1,6-Hexamethylendiamin. Besonders bevorzugt ist Ethylendiamin.

Anteilig können auch Monoamine, wie z.B. Butylamin, Ethylamin und Amine der Jeffamin^{®} M-Reihe (Huntsman Corp. Europe, Belgien), aminofunktionelle Polyethylenoxide und Polypropylenoxide zugesetzt werden.

Die Herstellung des wässrigen Polyurethans (B) kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergier-, Emulgier- oder Lösungsschritt. Im Anschluss erfolgt gegebenenfalls eine weitere Polyaddition oder Modifikation in disperser Phase.

Zur Herstellung des Polyurethans (B) können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671 - 1682). Bevorzugt ist das Schmelz-Emulgier- und das Aceton-Verfahren. Besonders bevorzugt ist das Aceton-Verfahren.

Üblicherweise werden die Bestandteile (b1) bis (b5), die keine primären oder sekundären Aminogruppen aufweisen, und ein Polyisocyanat (a) zur Herstellung eines Polyurethan-Präpolymers im Reaktor ganz oder teilweise vorgelegt und gegebenenfalls mit einem mit Wasser mischbaren aber gegenüber Isocyanatgruppen inerten Lösungsmittel verdünnt, bevorzugt aber ohne Lösungsmittel, auf höhere Temperaturen, bevorzugt im Bereich von 50 bis 120°C, aufgeheizt.

Geeignete Lösungsmittel sind z.B. Aceton, Butanon, Tetrahydrofuran, Dioxan, Acetonitril, Dipropylenglykoldimethylether und 1-Methyl-2-pyrrolidon, die nicht nur zu Beginn der Herstellung sondern gegebenenfalls in Teilen auch später zugegeben werden können. Bevorzugt sind Aceton und Butanon. Es ist möglich, die Reaktion unter Normaldruck oder erhöhtem Druck, z.B: oberhalb der Normaldruck-Siedetemperatur eines gegebenenfalls zugegebenen Lösungsmittels wie z.B. Aceton durchzuführen.

Weiterhin können die zur Beschleunigung der Isocyanatadditionsreaktion bekannten Katalysatoren, wie z. B. Triethylamin, 1,4-Diazabicyclo-[2,2,2]-octan, Zinndioktoat oder Dibutylzinndilaurat mit vorgelegt oder später zudosiert werden. Bevorzugt ist Dibutylzinndilaurat.

Anschließend werden die gegebenenfalls zu Beginn der Reaktion noch nicht zugegebenen Bestandteile (a) und/oder (b1) bis (b4), die keine primären oder sekundären Aminogruppen aufweisen, zudosiert. Bei der Herstellung des Polyurethan-Präpolymeren beträgt das Stoffmengenverhältnis von Isocyanatgruppen zu mit Isocyanat reaktiven Gruppen 0,90 bis 3, bevorzugt 0,95 bis 2, besonders bevorzugt 1,05 bis 1,5. Die Umsetzung der Komponenten (a) mit (b) erfolgt bezogen auf die Gesamtmenge an mit Isocyanaten reaktiven Gruppen des Teils von (b), der keine primären oder sekundären Aminogruppen aufweist, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, z.B. Infrarot- oder Nahinfrarot-Spektren, Bestimmungen des Brechungsindex als auch chemische Analysen, wie Titrationen, von entnommenen Proben vorgenommen werden. Es werden Polyurethan-Präpolymere, die freie Isocyanatgruppen enthalten, in Substanz oder in Lösung erhalten.

Nach oder während der Herstellung der Polyurethan-Präpolymere aus (a) und (b) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin. Die Stoffmenge der Basen liegt zwischen 50 und 100 %, bevorzugt zwischen 60 und 90 % der Stoffmenge der anionischen Gruppen. Im Falle kationischer Gruppen werden Schwefelsäuredimethylester oder Bernsteinsäure eingesetzt. Werden nur nichtionisch hydrophilierte Verbindungen (b1) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Die gegebenenfalls noch verbliebenen Isocyanatgruppen werden durch Reaktion mit Di-oder Polyaminen (b5) und/oder falls vorhanden aminischen Komponenten (b1) umgesetzt. Diese Kettenverlängerung kann dabei entweder in Lösungsmittel vor dem Dispergieren oder in Wasser nach dem Dispergieren durchgeführt werden. Sind aminische Komponenten in (b1) enthalten, erfolgt die Kettenverlängerung bevorzugt vor der Dispergierung.

Die Di- oder Polyamine (b5) und/oder falls vorhanden die aminische Komponente (b1) kann mit organischen Lösungsmitteln und/oder mit Wasser verdünnt dem Reaktionsgemisch zugegeben werden. Bevorzugt werden 70 bis 95 Gew.-% Lösungsmittel und/oder Wasser eingesetzt. Sind mehrere aminische Komponenten (b1) und/oder (b5) vorhanden, so kann die Umsetzung nacheinander in beliebiger Reihenfolge oder gleichzeitig durch Zugabe einer Mischung erfolgen.

Zwecks Herstellung der Polyurethan-Dispersion (B) werden die Polyurethan-Präpolymere, gegebenenfalls unter starker Scherung, wie z.B. starkem Rühren, entweder in das Dispergierwasser eingetragen oder man rührt umgekehrt das Dispergierwasser zu den Präpolymeren. Anschließend kann dann, falls noch nicht in der homogenen Phase geschehen, die Molmassenerhöhung durch Reaktion von gegebenenfalls vorhandenen Isocyanatgruppen mit der Komponente (b5) erfolgen. Die eingesetzte Menge an Polyamin (b5) hängt von den noch vorhandenen, nicht umgesetzten Isocyanatgruppen ab. Bevorzugt werden 50 bis 100 %, besonders bevorzugt 75 bis 95 % der Stoffmenge der Isocyanatgruppen mit Polyaminen (b5) umgesetzt.

Die entstehenden Polyurethan-Polyharnstoff-Polymere weisen einen Isocyanatgehalt von 0 bis 2 Gew.-%, bevorzugt von 0 bis 0,5 Gew.% auf.

Gegebenenfalls kann das organische Lösungsmittel abdestilliert werden. Die Dispersionen haben einen Festkörpergehalt von 20 bis 70 Gew.-%, bevorzugt 30 bis 65 Gew.-%. Die nichtflüchtigen Anteile dieser Dispersionen besitzen einen Gehalt an Zerewitinoff-aktiven Wasserstoff-Atomen enthaltenden chemischen Gruppen von 0 bis 0,53 mmol/g, bevorzugt von 0 bis 0,4 mmol/g, besonders bevorzugt von 0 bis 0,25 mmol/g.

Als Polyisocyanat (A) können unblockierte Polyisocyanate (A') eingesetzt werden, welche durch Modifizierung einfacher aliphatischer, cycloaliphatischer, araliphatischer und/oder aromatischer Diisocyanate, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur erhältlich sind, wie sie beispielsweise in J. Prakt. Chem. 336 (1994) Seite 185-200 beispielhaft beschrieben sind.

Geeignete Diisocyanate zur Herstellung der Polyisocyanate (A') sind durch Phosgenierung oder nach phosgenfreien Verfahren, beispielsweise durch thermische Urethanspaltung, zugängliche Diisocyanate des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Weiterhin sind auch Triisocyanate wie Triphenylmethan-4,4',4"-triisocyanat und/oder 4-Isocyanatomethyl-1,8-octandiisocyanat geeignet.

Bevorzugt handelt es sich bei der Ausgangskomponenten (A') um Polyisocyanate oder Polyisocyanatgemische der genannten Art mit ausschließlich aliphatisch und/oder cycloaliphatisch gebundenen Isocyanatgruppen.

Besonders bevorzugte Ausgangskomponenten (A') sind Polyisocyanate oder Polyisocyanatgemische mit Isocyanurat und/oder Biuretstruktur auf Basis von HDI, IPDI und/oder 4,4'-Diisocyanatodicyclohexylmethan.

Um eine bessere Einarbeitbarkeit der genannten Polyisocyanate (A') in das wässrige Bindemittel (B) zu erzielen, sind die Polyisocyanate bevorzugt hydrophil modifiziert. Eingesetzt werden dazu nach an sich bekannten Methoden hydrophilierte obengenannte Polyisocyanate. Die Hydrophilierung kann z.B. anionisch, kationisch oder nichtionisch über interne oder externe Emulgatoren erfolgen.

Geeignete interne Emulgatoren sind beispielsweise solche, die unter Komponente (b1) oben beschrieben wurden. Polyisocyanate, die durch Carboxylgruppen hydrophiliert wurden, lassen sich nach Neutralisation der Carboxylgruppen sehr feinteilig in wässrige Systeme einrühren, ohne dass hohe Scherkräfte erforderlich sind. Weiterhin sind durch Polyether hydrophil-modifizierte Polyisocyanate einsetzbar. Die Herstellung solcher wasserdispergierbaren Polyisocyanate wird beispielsweise in der EP-A 0 959 087 (Seite 2, Zeilen 25- 46) und EP-A 1 065 228 (Seite 4 Zeile 43 bis Seite 10 Zeile 35) ausführlich erläutert.

Ebenfalls geeignete interne Emulgatoren sind die in der EP-A 0 703 255 beschriebenen ionisch hydrophilierte wasseremulgierbare Polyisocyanate, die als Emulgatoren Reaktionsprodukte aus Polyisocyanat und beliebigen hydroxy-, mercapto- oder aminofunktionellen Verbindungen mit mindestens einer schwefelsauren Gruppe bzw. deren Anion enthalten. Als bevorzugte schwefelsaure Aufbaukomponenten zur Herstellung der Emulgatoren werden dabei Hydroxysulfonsäuren mit aliphatisch gebundenen OH-Gruppen oder die Salze solcher Hydroxysulfonsäuren genannt, beispielsweise spezielle Polyethersulfonate, wie sie z.B. unter der Bezeichnung Tegomer^{®} (Th. Goldschmidt AG, Essen, DE) gehandelt werden, Bisulfit-Addukte an ungesättigte Alkohole, Hydroxyethan- und Hydroxypropansulfonsäure sowie Aminosulfobetaine, die sich durch Quarternierung tertiärer Aminoalkohole mit 1,3-Propansulton herstellen lassen. Bevorzugt sind auch 2-(Cyclohexylamino)-ethansulfonsäure und 3-(Cyclohexylamino)-propansulfonsäure oder deren Salze als Hydrophilierungskomponenten.

Geeignete externe Emulgatoren sind beispielsweise anionische, wie solche auf Alkylsulfat-Basis, Alkylarylsulfonate, Alkylphenolpolyethersulfate wie z.B. in Houben-Weyl, Methoden der organischen Chemie, Erweiterungs- und Folgebände, 4. Auflage, Band E 20, 1987 (Teil 1, Seiten 259 bis 262) angegeben oder Alkylpolyethersulfate oder nichtionische Emulgatoren, wie z.B. die Alkoxylierungs-, bevorzugt Ethoxylierungsprodukte von Alkanolen, Phenolen oder Fettsäuren.

Es ist weiterhin möglich, dass die beschriebenen Polyisocyanate zusätzlich ungesättigte Gruppen, bevorzugt Acrylat- oder Methacrylatgruppen aufweisen. Solche Polyisocyanate sind an sich bekannt und werden z.B. in der US-A 6,335,381 (S.2, Z. 43 bis S. 8, Z. 48) beschrieben. Sie werden beispielsweise durch teilweise Umsetzung der oben genannten Polyisocyanate mit hydroxyfunktionellen Acrylat- oder Methacrylatverbindungen, wie z.B. Hydroxethylacrylat oder Pentaerythrittriacrylat erhalten. Es werden dabei bevorzugt Acrylatverbindungen mit einer mittleren Hydroxyfunktionalität zwischen 0,2 und 2, bevorzugt zwischen 0,4 und 1,2 eingesetzt.

Die Polyisocyanate (A') weisen einen NCO-Gehalt von 1 % bis 50 %, bevorzugt von 8 % bis 25 % auf. Sie können gegebenfalls mit einem mit Wasser mischbaren, aber gegenüber Isocyanaten inerten Lösungsmittel verdünnt werden.

Bevorzugt werden durch interne Emulgatoren hydrophilierte Polyisocyanate, besonders bevorzugt allophanathaltige, Polyether-hydrophilierte Polyisocyanate eingesetzt, die z.B. in der EP-A 1 065 228 (Seite 4 Zeile 43 bis Seite 10 Zeile 35) beschrieben werden. Bevorzugt sind 60 bis 99 mol-% des Polyethers über Allophanatgruppen am Polyisocyanat gebunden.

Geeignete blockierte Polyisocyanate (A"), die in den erfindungsgemäßen Beschichtungsmitteln eingesetzt werden, sind wasserdispergierbare oder wasserlösliche blockierte Polyisocyanate.

Geeignete wasserdispergierbare oder wasserlösliche blockierte Polyisocyanate (A") werden durch Umsetzung von
(A"1) mindestens einem Polyisocyanat mit aliphatisch, cycloaliphatisch, araliphatisch und/oder aromatisch gebundenen Isocyanatgruppen,
(A"2) mindestens einer ionischen oder potentiell ionischen und/oder nichtionischen Verbindung,
(A"3) mindestens einem Blockierungsmittel,
(A"4) gegebenenfalls einem oder mehreren (cyclo)aliphatischen Mono- bzw. Polyaminen mit 1 bis 4 Aminogruppen des Molekulargewichtsbereichs 32 bis 300,
(A"5) gegebenenfalls einem oder mehreren mehrwertigen Alkoholen mit 1 bis 4 Hydroxylgruppen des Molekulargewichtsbereichs 50 bis 250 und
(A"6) gegebenenfalls ein oder mehrere isocyanatreaktiven und ungesättigte Gruppen enthaltende Verbindungen erhalten.

Die Polyisocanate (A") können gegebenenfalls Stabilisierungsmittel (A"7) und andere Hilfsstoffe sowie gegebenenfalls Lösemittel (A"8) enthalten.

Die wasserdispergierbaren oder wasserlöslichen blockierten Polyisocyanate (A") sind aufgebaut aus 20 bis 80 Gew.%, bevorzugt 25 bis 75 Gew.%, besonders bevorzugt 30 bis 70 Gew.% der Komponente (A"1), 1 bis 40 Gew.-%, bevorzugt 1 bis 35 Gew.-%, besonders bevorzugt 5 bis 30 Gew.-% der Komponente (A"2), 15 bis 60 Gew.-% , bevorzugt 20 bis 50 Gew.-%, besonders bevorzugt 25 bis 45 Gew.-% der Komponente (A"3), 0 bis 15 Gew.%, bevorzugt 0 bis 10 Gew.-%, besonders bevorzugt 0 bis 5 Gew.-% der Komponente (A"4), 0 bis 15 Gew.%, bevorzugt 0 bis 10 Gew.-%, besonders bevorzugt 0 bis 5 Gew.-% der Komponente (A"5), 0 bis 40 Gew.%, bevorzugt 0 Gew.-% der Komponente (A"6) sowie 0 bis 15 Gew.-%, bevorzugt 0 bis 10 Gew.-%, besonders bevorzugt 0 bis 5 Gew.-% der Komponente (A"7) und gegebenenfalls 0 bis 20 Gew.-%, bevorzugt 0 bis 15 Gew.-%, besonders bevorzugt 0 bis 10 Gew.-% der Komponente (A"8), wobei die Summe der Komponenten sich zu 100 Gew.-% addiert.

Die wasserdispergierbaren oder wasserlöslichen blockierten Polyisocyanate (A") können in den erfindungsgemäßen Beschichtungsmitteln als wässrige Lösung oder Dispersion verwendet werden. Die Lösung oder Dispersion der Polyisocyanate weist einen Festkörpergehalt zwischen 10 bis 70 Gew.-%, bevorzugt von 20 bis 60 Gew.-% und besonders bevorzugt von 25 bis 50 Gew.-% auf und der Anteil von (A"8) an der Gesamtzusammensetzung ist bevorzugt kleiner 15 Gew.-% und besonders bevorzugt kleiner 10 Gew.-% und ganz besonders bevorzugt kleiner 5 Gew.-%.

Die zur Herstellung der blockierten Polyisocyanate (A") verwendeten Polyisocyante (A"1) weisen eine (mittlere) NCO-Funktionalität von 2,0 bis 5,0, bevorzugt von 2,3 bis 4,5, einen Gehalt an Isocyanatgruppen von 5,0 bis 27,0 Gew.-%, bevorzugt von 14,0 bis 24,0 Gew.-% und einen Gehalt an monomeren Diisocyanaten von weniger als 1 Gew.-%, bevorzugt weniger als 0,5 Gew.-% auf. Die Isocyanatgruppen der Polyisocyanate (A"1) liegen zu mindestens 50 %, bevorzugt zu mindestens 60 % und besonders bevorzugt zu mindestens 70 % in blockierter Form vor.

Geeignete Polyisocyanate (A"1) zur Herstellung der blockierten Polyisocyanate (A") sind die unter (A') genannten durch Modifizierung einfacher aliphatischer, cycloaliphatischer, araliphatischer und/oder aromatischer Diisocyanate hergestellten, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) Seite 185-200 beispielhaft beschrieben sind.

Geeignete Verbindungen für die Komponente (A"2) sind ionische oder potentiell ionische und/oder nichtionische Verbindungen wie sie bereits unter der Komponente (b1) beschrieben wurden.

Die Komponente (A"2) ist bevorzugt eine Kombination aus nichtionischen und ionischen Hydrophilierungsmitteln. Besonders bevorzugt sind Kombinationen aus nichtionischen und anionischen Hydrophilierungsmitteln.

Als Beispiel für Blockierungsmittel (A"3) seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin oder beliebige Gemische dieser Blockierungsmittel. Bevorzugt werden Butanonoxim, 3,5-Dimethylpyrazol, ε-Caprolactam, N-tert.-Butyl-benzylamin als Blockierungsmittel (A"3) verwendet. Besonders bevorzugte Blockierungsmittel (A"3) sind Butanonoxim und ε-Caprolactam.

Als Komponente (A"4) kommen mono-, di-, tri-, und/oder tetra-aminofunktionelle Substanzen des Molekulargewichtsbereichs bis 300 in Betracht, wie z.B. Ethylendiamin, 1,2- und 1,3-Diaminopropan, 1,3-, 1,4- und 1,6-Diaminohexan, 1,3-Diamino-2,2-dimethylpropan, 1-Amino-3,3,5-trimethyl-5-aminoethyl-cyclohexan (IPDA), 4,4'-Diaminodicyclohexylmethan, 2,4- und 2,6-Diamino-1-methyl-cyclohexan, 4,4'-Diamino-3,3'-dimethyl-dicyclohexylmethan, 1,4-Bis-(2-amino-prop-2-yl)-cyclo-hexan oder Gemische dieser Verbindungen

Bei der Komponente (A"5) handelt es sich um mono-, di-, tri- und/oder tetra-hydroxyfunktionelle Substanzen des Molekulargewichts bis 250, wie z.B. Ethylenglykol, Propylenglykol, 1,4-Butandiol, 1,6-Hexandiole, Glycerin, Trimethylolethan, Trimethylolpropan, die isomeren Hexantriole, Pentaerythrit oder Gemische dieser Verbindungen.

Als Komponente (A"6) werden hydroxyfunktionelle und (meth)acrylfunktionelle Verbindungen mit den Isocyanaten umgesetzt. Solche Verbindungen sind beipielsweise als Bestandteile der Komponente (b2) oben beschrieben. Bevorzugt sind Verbindungen mit einer mittleren Hydroxyfunktionalität von 0,2 bis 2, besonders bevorzugt von 0,7 bis 1,3. Besonders bevorzugt sind 2-Hydroxyethyl(meth)acrylat, Poly(ε-caprolacton)monoacrylate, wie z.B. Tone M100^{®} (Union Carbide, USA), 2-Hydroxy-propylacrylat, 4-Hydroxybutylacrylat, Trimethylolpropandiacrylat, Glycerindiacrylat, Pentaerythrittriacrylat oder Dipentaerythritpentaacrylat.

Die blockierten Polyisocyanate (A") können gegebenenfalls ein Stabilisierungmittel oder Stabilisierungsmittelgemisch (A"7) enthalten. Geeignete Verbindungen (A"7) sind z.B. Antioxidantien wie 2,6-Ditert-butyl-4-methylphenol, UV-Absorber vom Typ 2-Hydroxyphenyl-benzotriazol oder Lichtschutzmittel vom Typ der HALS-Verbindungen oder andere handelsübliche Stabilisierungsmittel, wie sie beispielsweise in "Lichtschutzmittel für Lacke" (A. Valet, Vincentz Verlag, Hannover, 1996,) und "Stabilization of Polymeric Materials" (H. Zweifel, Springer Verlag, Berlin, 1997, Appendix 3, S. 181-213) beschrieben sind.

Bevorzugt sind Stabilisierungsmittelgemische, die Verbindungen mit einen 2,2,6,6-Tetramethylpiperidinyl-Rest, (HALS) aufweisen. Der Piperidinyl-Stickstoff des HALS-Ringes ist nicht substituiert und weist keinerlei Hydrazidstrukturen auf. Besonders bevorzugt ist eine Verbindung der Formel (II), 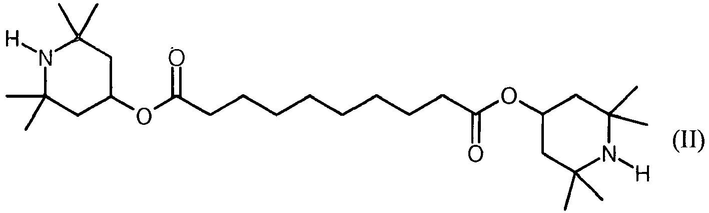 die beispielsweise unter der Bezeichnung Tinuvin^{®} 770 DF von der Firma Ciba Spezialitäten (Lampertheim, DE) vertrieben wird.

Idealerweise werden die o.g. Verbindungen kombiniert mit Substanzen die über Hydrazidstrukturen verfügen, wie beispielsweise Säurehydrazide und -dihydrazide, wie z.B. Essigsäurehydrazid Adipinsäurehydrazid, Adipinsäuredihydrazid oder auch Hydrazin-Addukte aus Hydrazin und cyclischen Carbonaten, wie sie beispielsweise in der EP-A 654 490 (S. 3, Zeile 48 bis S. 4 Zeile 3) genannt werden. Bevorzugt wird Adipinsäuredihydrazid und ein Addukt aus 2 Mol Propylencarbonat und 1 Mol Hydrazin der allgemeinen Formel (III),

-CO-NH-NH- (III)

verwendet.

Besonders bevorzugt ist das Addukt aus 2 Mol Propylencarbonat und 1 Mol Hydrazin der allgemeinen Formel (IV):

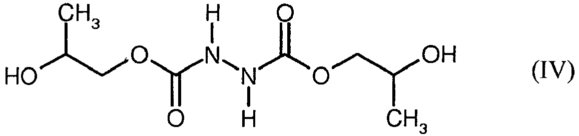

Als organische Lösungsmittel (A"8) geeignet sind die an sich üblichen Lacklösungsmittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol oder Testbenzin. Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind, sind ebenfalls geeignet. Weitere Lösungsmittel sind beispielsweise Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylengly koldiacetat, Diethylenglykoldimethylether, Dipropylenglykoldimethylether, Diethylenglykolethyl- und -butyletheracetat, N-Methylpyrrolidon und N-Methylcaprolactam oder beliebige Gemische solcher Lösungsmittel. Bevorzugte Lösungsmittel sind Aceton, 2-Butanon, 1-Methoxypropyl-2-acetat, Xylol, Toluol, Mischungen, die vor allem höher substituierte Aromaten enthalten, wie sie beispielsweise unter den Bezeichnungen Solvent Naphtha, Solvesso^{®} (Exxon Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind sowie N-Methylpyrrolidon. Besonders bevorzugt sind Aceton, 2-Butanon und N-Methylpyrrolidon.

Die Herstellung der blockierten Polyisocyanate (A") kann nach bekannten Methoden des Standes der Technik (z.B. in der DE-A 2 456 469, Spalte 7-8, Beispiel 1-5 und DE-A 2 853 937 S. 21-26, Beispiel 1-9) erfolgen.

Die wasserdispergierbaren oder wasserlöslichen blockierten Polyisocyanate (A") können beispielsweise durch Umsetzung der Komponenten (A"1), (A"2), (A"3) und gegebenenfalls (A"4) bis (A"7) in beliebiger Reihenfolge gegebenenfalls unter Zuhilfenahme eines organischen Lösungsmittels (A" 8) umgesetzt werden.

Bevorzugt wird zunächst (A"1) mit gegebenenfalls einem Teil, bevorzugt dem nichtionischen Teil der Komponente (A"2) sowie gegebenenfalls (A"4) und (A"5) umgesetzt. Es erfolgt anschließend die Blockierung mit der Komponente (A"3) und darauf folgend die Umsetzung mit dem ionische Gruppen enthaltenden Teil der Komponente (A"2). Gegebenenfalls können dem Reaktionsgemisch organische Lösungsmittel (A"8) zugesetzt werden. In einem weiteren Schritt wird gegebenenfalls noch die Komponente (A"7) hinzugefügt.

Die Herstellung der wässrigen Lösung oder Dispersion der blockierten Polyisocyanate (A") erfolgt anschließend, indem die wasserdispergierbaren blockierten Polyisocyanate entweder durch Einarbeiten in Wasser oder durch Zugabe von Wasser in eine wässrige Dispersion oder Lösung überführt werden. Das gegebenenfalls verwendete organische Lösungsmittel (A"8) kann im Anschluss an die Dispergierung destillativ entfernt werden. Bevorzugt wird auf die Verwendung von Lösungsmittel (A" 8) verzichtet.

Vorgenannte wasserdispergierbare oder wasserlösliche blockierte Polyisocyanate können auch ungesättigte, zur radikalischen Polymerisation befähigte Gruppen enthalten. Dazu können die Polyisocyanate vor dem Dispergieren, Emulgieren oder Lösen in Wasser zunächst teilweise blockiert und dann mit isocyanatreaktiven und ungesättigte Gruppen enthaltenden Verbindungen (A"6) umgesetzt werden oder die Polyisocyanate werden zunächst mit isocyanatreaktiven und ungesättigte Gruppen enthaltenden Verbindungen (A"6) und dann mit Blockierungsmitteln (A"3) umgesetzt.

Für die Herstellung der wässrigen Lösung oder Dispersion der blockierten Polyisocyanate (A") werden im Allgemeinen solche Mengen an Wasser eingesetzt, dass die resultierenden Dispersionen einen Feststoffgehalt von 10 bis 70 Gew.-%, bevorzugt 20 bis 60 Gew.-% und besonders bevorzugt 25 bis 50 Gew.-% aufweisen.

Als Initiatoren (C) für eine radikalische Polymerisation können durch Strahlung und/oder thermisch aktivierbare Initatoren zum Einsatz kommen. Fotoinitiatoren, die durch UV- oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind aromatische Ketonverbindungen, wie z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketal, Acylphosphinoxide, z.B. 2,4,6-Trimethyl-benzoyl-diphenylphosphinoxid, Bisacylphosphinoxide, Phenylglyoxylsäureester, Campherchinon, α-Aminoalkylphenone, α,α-Diakoxyacetophenone und α-Hydroxyalkylphenone. Bevorzugt sind Fotoinitiatoren, die leicht in wässrige Beschichtungsmittel einarbeitbar sind. Solche Produkte sind beispielsweise Irgacure^{®} 500, Irgacure^{®} 819 DW (Fa. Ciba, Lampertheim, DE), Esacure^{®} KIP (Fa. Lamberti, Aldizzate, Italien). Es können auch Gemische dieser Verbindungen eingesetzt werden.

Wird die Härtung thermisch initiiert, eignen sich Peroxyverbindungen wie Diacylperoxide z.B. Benzoylperoxid, Alkylhydroperoxid wie Diisopropylbenzolmonohydroperoxid, Alkylperester wie tert.-Butylperbenzoat, Dialkylperoxide wie Di.-tert-butylperoxid, Peroxidcarbonate wie Dicetylperoxidcarbonat, anorganische Peroxide wie Ammoniumperoxodisulfat, Kaliumperoxodisulfat oder auch Azoverbindungen wie 2,2'-Azobis[N-(2-propenyl)-2-methylpropionamide], 1-[(cyano-1-methyl-ethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]-propionamide}, 2,2'-Azobis{2-methyl-N-[2-(1-hydroxybutyl)]propionamide, 2,2'-Azobis{2-methyl-N-[1,1-bis(hydroxymethyl)-2-hydroxyethyl]propionamide, weiterhin auch Benzpinakol. Bevorzugt werden Verbindungen, die wasserlöslich sind oder als wässrige Emulsionen vorliegen. Diese Radikalbildner können in bekannter Weise mit Beschleunigern kombiniert werden.

Ebenfalls Gegenstand der vorliegenden Erfindung ist ein Verfahren zur Herstellung der erfindungsgemäßen wässrigen Beschichtungsmittel, dadurch gekennzeichnet, dass die Bestandteile (I), (II) und (III) nacheinander in beliebiger Reihenfolge oder gleichzeitig miteinander vermischt werden. Enthalten die Beschichtungsmittel ein Polyisocyanat (A'), welches noch freie, unblockierte Isocyanatgruppen aufweist, so besitzen sie eine Topfzeit von 1 bis 96, bevorzugt 4 bis 24 Stunden, in der die Verarbeitung erfolgen sollte. Es ist daher bevorzugt die Bestandteile von (II) erst möglichst kurz vor der Applikation mit (I) zu vermischen. Enthalten die Beschichtungsmittel keine freien Isocyanatgruppen, bei Einsatz der Komponente (A"), so besitzen sie keine Topfzeit und sind über Monate oder länger lagerstabil.

Es ist möglich die für das erfindungsgemäße Verfahren eingesetzten Beschichtungsmittel alleine einzusetzen oder mit den in der Beschichtungstechnologie bekannten Bindemitteln, Hilfsstoffen und Zugschlagstoffe, insbesondere Lichtschtzmittel wie UV-Absorber und sterisch gehinderte Amine (HALS), weiterhin Antioxidantien, Füllstoffe sowie Lackhilfsmittel, z.B. Antiabsetzmittel, Entschäumungs- und/oder Netzmittel, Verlaufmittel, Reaktiv-Verdünner, Weichmacher, Katalysatoren, Hilfslösemittel und/oder Verdicker und Additiven, wie beispielsweise Dispersionen, Pigmente, Farbstoffe oder Mattierungsmittel zu versetzen. Insbesondere sind Kombinationen mit weiteren Bindemitteln wie Polyurethandispersionen oder Polyacrylatdispersionen, die gegebenenfalls auch hydroxyfunktionell sein können, problemlos möglich.

Die erfindungsgemäßen Beschichtungsmittel ergeben nach Entfernen des Wassers bereits ohne Zugabe von Hilfsstoffen staubtrockene bis harte und mechanisch belastbare Überzüge. Das Entfernen des Wassers kann durch Abdunsten oder forciertes Trocknen z.B. Einwirken von Wärme, warmer und/oder entfeuchteter Luft und/oder Wärmestrahlung erfolgen. Durch anschließende strahlenchemisch und gegebenenfalls zusätzliche thermisch induzierte Vernetzung härten die Filme zu besonders hochwertigen, kratzfesten und chemikalienresistenten Lacküberzügen aus. Bevorzugt wird nach Entfernen des Wassers zunächst durch UV- oder Tageslicht gehärtet, anschließend findet zwischen 0°C und 200°C, bevorzugt jedoch zwischen 20°C und 100°C eine Nachhärtung statt. Durch die Nachhärtung wird auch an gegebenenfalls schlecht oder nicht belichteten Bereichen eine Härtung der Beschichtung erzielt. Dies ist insbesondere dann von Vorteil, wenn das Substrat nicht stark erwärmt werden kann, wie z.B. Holz. Durch Einsatz der erfindungsgemäßen Beschichtungsmittel wird auch die Haftung zum Untergrund verbessert.

Ebenfalls Gegenstand der vorliegenden Anmeldung ist ein Verfahren zur Herstellung von Beschichtungen, dadurch gekennzeichnet, dass das erfindungsgemäße wässrige Beschichtungsmittel auf ein Substrat appliziert, das Wasser entfernt und anschließend gehärtet wird.

Die erfindungsgemäßen Beschichtungsmittel lassen sich durch die üblichen Techniken auf unterschiedlichste Substrate applizieren, wie beispielsweise durch Spritzen, Walzen, Rakeln, Gießen, Sprühen, Streichen oder Tauchen. Substrate sind ausgewält aus der Gruppe Holz, Metall, Kunststoff, Papier, Leder, Textilien, Filz, Glas oder mineralische Untergründe. Bevorzugte Substrate sind Holz, Glas- oder Kohlefasern.

Die applizierten Schichtdicken (vor der Härtung) liegen typischerweise zwischen 0,5 und 5000 µm, bevorzugt zwischen 5 und 1500 µm, besonders bevorzugt zwischen 15 und 1000 µm.

Die Strahlungshärtung erfolgt bevorzugt durch Einwirkung energiereicher Strahlung, also UV-Strahlung oder Tageslicht, z.B. Licht der Wellenlänge 200 bis 700 nm, oder durch Bestrahlen mit energiereichen Elektronen (Elektronenstrahlung, 150 bis 300 keV). Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können mit Filtern ausgestattet sein, die den Austritt eines Teils des emittierten Strahlerspekturms verhindern. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Gegenstand der Erfindung ist auch die Verwendung der erfindungsgemäßen wässrigen Beschichtungsmittel in Klebstoffen, Dichtmassen und Lacken, bevorzugt ist die Verwendung in Lacken zur Beschichtung von Holz, beispielsweise in Möbel- oder Parkettbeschichtung sowie die Verwendung in Schlichten, bevorzugt Glasfaserschlichten.

### Beispiele:

### UV-härtende Polyurethandispersionen (B)

### Beispiel 1:

Herstellung eines Polyesteracrylats 1a) analog DE-C 197 15 382 (S. 5, Z. 21 - 27), OH-Zahl: 160 mg KOH/g, Säurezahl: 1 mg KOH/g, Viskosität: 0,5 Pa s bei 23°C.

### Herstellung eines Polyesteracrylats 1b):

In einem beheizbaren Reaktionsgefäß mit Rührer, Gaseinleitung, Temperaturmessung, Wasserabscheider und Rückflusskühler werden 98,1 g Maleinsäureanhydrid, 739,2 g eines 4fach propoxilierten Trimethylolpropans, 259,2 g Acrylsäure, 10,5 g 4-Toluolsulfonsäure Monohydrat, 3,2 g 4-Methoxyphenol, 0,2 g 2,5-Di-tert.-butyl-hydrochinon und 448,3 g Isooktan unter Rühren und Einleiten eines Luftstroms von 1 l pro Stunde zum Rückfluss erhitzt. Bei 100°C bis 105°C wird Wasser abgeschieden, bis eine Säurezahl von 5 oder darunter erreicht ist. Im Anschluß wird das Lösungsmittel im Vakuum abdestilliert. Es resultiert ein Polyesteracrylat einer Säurezahl von 4 mg KOH/g, einer OH-Zahl von 110 mg KOH/g und einer Viskosität von 1,6 Pa s bei 23°C.

### Herstellung einer Polyurethandispersion:

In einem Reaktionsgefäß mit Rührer, Innenthermometer und Gaseinleitung (Luftstrom 1 l/h) werden 278,9 g des Polyesteracrylats 1b), 63,0 g des Polyesteracrylats 1a), 8,5 g Neopentylglykol, 21,9 g Dimethylolpropionsäure, 0,5 g Dibutylzinndilaurat, 167,6 g Aceton vorgelegt, mit 101,8 g Desmodur^{®} W (aliphatisches Diisocyanat; Bayer AG, Leverkusen, DE) versetzt und derart aufgeheizt, dass ein konstanter Aceton-Rückfluss herrscht. Es wird solange bei dieser Temperatur gerührt, bis die Reaktionsmischung einen NCO-Gehalt von 1,8 ± 0,1 Gew. % enthält.

Dann wird auf 40°C abgekühlt, und es werden schnell 14,7 g Triethylamin zugegeben. Nach 10 min wird die Reaktionsmischung unter schnellem Rühren in 883,2 g Wasser von 20°C gegossen. Nachdem sich die Dispersion ausgebildet hat, werden 27,7 g Isophorondiamin in 77,0 g Wasser zugefügt.

Nach 30 min Nachrühren ohne Heizen oder Kühlen wird das Produkt im Vakuum (50 mbar, max. 50°C) destilliert, bis ein Festkörper von 39 ±1 Gew.% erreicht ist. Die Dispersion hat einen pH-Wert von 8,0 und eine mittlere Teilchengröße von 159 nm (Laser-Korrelations-Spektroskopie-Messung: Zetasizer 1000, Malvern Instruments, Malvern, UK). Das Produkt besitzt einen Gehalt an aktiven Wasserstoff aufweisenden Gruppen von 0,52 mmol/g.

### Beispiel 2:

### Herstellung einer Polyurethandispersion:

In einem Reaktionsgefäß mit Rührer, Innenthermometer und Gaseinleitung (Luftstrom 1 l/h) werden 169,0 g des hydroxyfunktionellen Epoxyacrylats Ebecryl^{®} 600 (Fa. UCB GmbH, Kerpen, DE), 34,5 g des Polyacrylatdiols Tegomer^{®} BD 1000 (Fa. Goldschmidt, Essen, DE), 9,8 g Neopentylglykol, 17,1 g Dimethylolpropionsäure, 0,4 g Dibutylzinndilaurat, 133,8 g Aceton vorgelegt, mit 113,7g Desmodur^{®} I (aliphatisches Diisocyanat; Bayer AG, Leverkusen, DE) und 56,6 g Desmodur^{®} H (aliphatisches Diisocyanat; Bayer AG, Leverkusen, DE) versetzt und derart aufgeheizt, dass ein konstanter Aceton-Rückfluss herrscht. Es wird solange bei dieser Temperatur gerührt, bis die Reaktionsmischung einen NCO-Gehalt von 4,0 ± 0,1 Gew. % enthält.

Dann wird auf 40°C abgekühlt, und es werden 495,1 g Aceton zugegeben. Nach 5 min Rühren bei 40°C werden 15,84 g Ethylendiamin in 63,7 g Wasser zugefügt. Nach Erreichen eines NCO-Gehalts < 0,1 Gew. % wird die Reaktionsmischung unter schnellem Rühren in 580 g Wasser von 20°C gegossen.

Nach 30 min Nachrühren ohne Heizen oder Kühlen wird das Produkt im Vakuum (50 mbar, max. 50°C) destilliert, bis ein Festkörper von 39 ±1 Gew.% erreicht ist. Die Dispersion hat einen pH-Wert von 8,9 und eine mittlere Teilchengröße von 262 nm (Laser-Korrelations-Spektroskopie-Messung: Zetasizer 1000, Malvern Instruments, Malvern, UK). Das Produkt besitzt einen Gehalt an aktiven Wasserstoff aufweisenden Gruppen von 0,2 mmol/g.

### Beispiel 3:

### Herstellung einer Polyurethandispersion:

In einem Reaktionsgefäß mit Rührer, Innenthermometer und Gaseinleitung (Luftstrom 1 l/h) werden 169,0 g des hydroxyfunktionellen Epoxyacrylats Ebecryl^{®} 600 (Fa. UCB GmbH, Kerpen, DE), 144,8 g des Polyesterdiols aus Adipinsäure, Hexandiol und Neopentylglykol der Molmasse 1700, 3,9 g Neopentylglykol, 13,1 g Dimethylolpropionsäure, 0,3 g Dibutylzinndilaurat, 127,5 g Aceton vorgelegt, mit 47,2 g Desmodur^{®} I (aliphatisches Diisocyanat; Bayer AG, Leverkusen, DE) und 77,9 g Desmodur^{®} H (aliphatisches Diisocyanat; Bayer AG, Leverkusen, DE) versetzt und derart aufgeheizt, dass ein konstanter Aceton-Rückfluss herrscht. Es wird solange bei dieser Temperatur gerührt, bis die Reaktionsmischung einen NCO-Gehalt von 3,2± 0,1 Gew. % enthält.

Dann wird auf 40°C abgekühlt, und es werden 481,7 g Aceton zugegeben. Nach 5 min Rühren bei 40°C werden 12,75 g Ethylendiamin in 38,3 g Wasser zugefügt. Nach Erreichen eines NCO-Gehalts < 0,1 Gew. % werden unter schnellem Rühren 625,6 g Wasser von 20°C zur Reaktionsmischung gegossen.

Nach 30 min Nachrühren ohne Heizen oder Kühlen wird das Produkt im Vakuum (50 mbar, max. 50°C) destilliert, bis ein Festkörper von 39 ±1 Gew.% erreicht ist. Die Dispersion hat einen pH-Wert von 8,9 und eine mittlere Teilchengröße von 110 nm (Laser-Korrelations-Spektroskopie-Messung: Zetasizer 1000, Malvern Instruments, Malvern, UK). Das Produkt besitzt einen Gehalt an aktiven Wasserstoff aufweisenden Gruppen von 0,03 mmol/g.

### Beispiel 4:

### Herstellung einer Polyurethandispersion

In einem Reaktionsgefäß mit Rührer, Innenthermometer und Gaseinleitung (Luftstrom 1 l/h) werden 298,0 g des Polyesteracrylats 1a), und 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 3,6 - 3,8 Gew.-% enthält. Wenn der NCO-Gehalt erreicht ist, wird das Prepolymer in 350,0 g Aceton gelöst und auf 40°C eingestellt.

Dann wird eine Lösung aus 9,9 g Ethylendiamin, 47,5 g 45 %ige AAS-Lösung (2-(2-Aminoethylamino-)ethansulfonsäure, in Wasser, Bayer AG, Leverkusen, DE) und 67,6 g Wasser in 2 min zugegeben und 5 min verrührt. Anschließend werden 692,8 g Wasser innerhalb 10 min zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 39 % erreicht ist. Die Dispersion hat einen pH-Wert von 7,0 und eine mittlere Teilchengröße von 86 nm (Laser-Korrelations-Spektroskopie-Messung: Zetasizer 1000, Malvern Instruments, Malvern, UK).

### Beispiel 5:

### Herstellung einer Polyurethandispersion

In einem Reaktionsgefäß mit Rührer, Innenthermometer und Gaseinleitung (Luftstrom 1 l/h) werden 298,0 g des Polyesteracrylats 1a), 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 4,2 - 4,4 Gew.-% enthält. Wenn der NCO-Gehalt erreicht ist, wird das Prepolymer in 350,0 g Aceton gelöst und auf 40°C eingestellt.

Dann wird eine Lösung aus 11,4 g Ethylendiamin, 36,9 g 45 %ige AAS-Lösung Lösung (2-(2-Aminoethylamino-)ethansulfonsäure, in Wasser, Bayer AG, Leverkusen, DE) und 63,7 g Wasser in 2 min zugegeben und 5 min verrührt. Anschließend werden 698,5 g Wasser innerhalb 10 min zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 39 % erreicht ist. Die Dispersion hat einen pH-Wert von 6,6 und eine mittlere Teilchengröße von 113 nm (Laser-Korrelations-Spektroskopie-Messung: Zetasizer 1000, Malvern Instruments, Malvern, UK).

### Beispiel 6:

### Herstellung einer Polyurethandispersion

In einem Reaktionsgefäß mit Rührer, Innenthermometer und Gaseinleitung (Luftstrom 1 l/h) 298,0 g des Polyesteracrylats 1a), 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 4,2 - 4,4 Gew. % enthält. Wenn der NCO-Gehalt erreicht ist, wird das Prepolymer in 350,0 g Aceton gelöst und auf 40°C eingestellt.

Dann wird eine Lösung aus 12,1 g Ethylendiamin, 31,7 g 45 %ige AAS-Lösung Lösung (2-(2-Aminoethylamino-)ethansulfonsäure, in Wasser, Bayer AG, Leverkusen, DE) und 61,7 g Wasser in 2 min zugegeben und 5 min verrührt. Anschließend werden 700,9 g Wasser innerhalb 10 min zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 39 % erreicht ist. Die Dispersion hat einen pH-Wert von 6,8 und eine mittlere Teilchengröße von 83 nm (Laser-Korrelations-Spektroskopie-Messung: Zetasizer 1000, Malvern Instruments, Malvern, UK).

### Beispiel 7:

### Herstellung einer Polyurethandispersion

In einem Reaktionsgefäß mit Rührer, Innenthermometer und Gaseinleitung (Luftstrom 1 l/h) werden 139,0 g des Polyesters PE 170 HN (Ester auf Basis von Adipinsäure, 1,6-Hexandiol, Neopentylglykol, MG = 1700, Bayer AG, Leverkusen, DE), 238,5 g des Polyesteracrylats 1a), 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 3,6 - 3,8 Gew. % enthält. Wenn der NCO-Gehalt erreicht ist, wird das Prepolymer in 350,0 g Aceton gelöst und auf 40°C eingestellt.

Dann wird eine Lösung aus 11,4 g Ethylendiamin, 36,9 g 45 %ige AAS-Lösung Lösung (2-(2-Aminoethylamino-)ethansulfonsäure, in Wasser, Bayer AG, Leverkusen, DE) und 63,7 g Wasser in 2 min zugegeben und 5 min verrührt. Anschließend werden 817,7 g Wasser innerhalb 10 min zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 40 % erreicht ist. Die Dispersion hat einen pH-Wert von 6,8 und eine mittlere Teilchengröße von 83 nm (Laser-Korrelations-Spektroskopie-Messung: Zetasizer 1000, Malvern Instruments, Malvern, UK).

### Beispiel 8:

### Herstellung einer Polyurethandispersion

In einem Reaktionsgefäß mit Rührer, Innenthermometer und Gaseinleitung (Luftstrom 1 l/h) werden 278,0 g des Polyesters PE 170 HN (Ester auf Basis von Adipinsäure, 1,6-Hexandiol, Neopentylglykol, MG = 1700, Bayer AG, Leverkusen, DE), 179,0 g des Polyesteracrylats 1a), 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 3,3 - 3,5 Gew.-% enthält. Wenn der NCO-Gehalt erreicht ist, wird das Prepolymer in 350,0 g Aceton gelöst und auf 40°C eingestellt.

Dann wird eine Lösung aus 11,4 g Ethylendiamin, 36,9 g 45 %ige AAS-Lösung Lösung (2-(2-Aminoethylamino-)ethansulfonsäure, in Wasser, Bayer AG, Leverkusen, DE) und 63,7 g Wasser in 2 min zugegeben und 5 min verrührt. Anschließend werden 936,9 g Wasser innerhalb 10 min zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 40 % erreicht ist. Die Dispersion hat einen pH-Wert von 6,7 und eine mittlere Teilchengröße von 176 nm (Laser-Korrelations-Spektroskopie-Messung: Zetasizer 1000, Malvern Instruments, Malvern, UK).

### Beispiel 9:

### Herstellung einer Polyurethandispersion

In einem Reaktionsgefäß mit Rührer, Innenthermometer und Gaseinleitung (Luftstrom 1 l/h) werden 418,0 g des Polyesters PE 170 HN (Ester auf Basis von Adipinsäure, 1,6-Hexandiol, Neopentylglykol, MG = 1700, Bayer AG, Leverkusen, DE), 119,0 g des Polyesteracrylats 1a), 27,0 g des Polyethers LB 25 (Bayer AG, DE, monofunktioneller Polyether auf Ethylenoxid-/Propylenoxidbasis mit einem mittleren Molgewicht von 2250 (OHZ = 25)) vorgelegt und aufgeschmolzen. Nach Zugabe von 168,6 g Isophorondiisocyanat (Desmodur I^{®}, Bayer AG, DE) und 170,0 g Aceton wird das Reaktionsgemisch auf Rückflusstemperatur aufgeheizt. Es wird solange bei dieser Temperatur gerührt, bis die Reaktionsmischung einen NCO-Gehalt von 3,0 - 3,2 Gew.-% enthält. Wenn der NCO-Gehalt erreicht ist, wird das Prepolymer in 350,0 g Aceton gelöst und auf 40°C eingestellt.

Dann wird eine Lösung aus 11,4 g Ethylendiamin, 36,9 g 45 %ige AAS-Lösung Lösung (2-(2-Aminoethylamino-)ethansulfonsäure, in Wasser, Bayer AG, Leverkusen, DE) und 63,7 g Wasser in 2 min zugegeben und 5 min verrührt. Anschließend werden 1057,2 g Wasser innerhalb 10 min zugesetzt. Die gebildete Dispersion wird bei 40°C weiter verrührt bis IR-spektroskopisch kein NCO-Gehalt in der Dispersion mehr nachgewiesen werden kann.

Das Produkt wird im Vakuum bei Temperaturen unter 50°C destilliert bis ein Festkörper von 40 % erreicht ist. Die Dispersion hat einen pH-Wert von 6,7 und eine mittlere Teilchengröße von 192 nm (Laser-Korrelations-Spektroskopie-Messung: Zetasizer 1000, Malvern Instruments, Malvern, UK).

### Wasserdispergierbares blockiertes Polyisocyanat (Komponente A")

### Beispiel 10:

154,1 g eines biuretgruppen-haltigen Polyisocyanats auf Basis von 1,6-Diisocyanatohexan (HDI) mit einem NCO-Gehalt von 23,0 % werden mit 6,3 g Polyether LB 25 (Bayer AG, DE, monofunktioneller Polyether auf Ethylenoxid-/Propylenoxidbasis mit einem mittleren Molgewicht von 2250 (OHZ = 25)) 30 min bei 100°C gerührt. Anschließend wird bei 90°C innerhalb von 20 min 60,6 g Butanonoxim so zugegeben, dass die Temperatur des Reaktionsgemisches 110°C nicht übersteigt. Es wird solange bei 100°C gerührt bis der theoretische NCO-Wert erreicht ist und danach auf 90°C abgekühlt. Nach einer Nachrührzeit von 5 min wird innerhalb von 2 min eine Mischung aus 22,0 g des Hydrophilierungsmittels KV 1386 (N-(2-Aminoethyl)-β-alanin, BASF AG, Ludwigshafen, DE) und 37,5 g Wasser zudosiert und weitere 7 min temperaturneutral weitergerührt. Im Anschluss daran erfolgt die Dispergierung durch Zugabe von 485,5 g Wasser. Nach einer Nachrührzeit von 4 h erhält man eine lagerstabile wässrige Dispersion mit einem Festkörpergehalt von 29,8 %.

### Beschichtungsmittel aus UV härtbaren Polyurethan-Dispersionen und Polyisocyanaten (A')

### Beispiel 11:

Herstellung von pigmentierten Lacken:

**Tabelle 1: Herstellung einer Pigmentpaste durch Dispergieren der folgenden Bestandteile in einem Dissolver bei 2000 U/min:**

| **Stoff** | **Funktion** | **Gew.Teile** | **Hersteller** |
|---|---|---|---|
| Wasser | | 24,3 | --------- |
| Disperbyk^{®} | Dispergierhilfsmittel | 7,5 | BYK-Chemie GmbH (Wesel, DE) |
| Dehydran^{®} 1293 | Entschäumer | 0,7 | Cognis GmbH & Co. KG (Düsseldorf, DE) |
| R-KB-2 | Titandioxid-Pigment | 50,5 | Kerr McGee GmbH & Co. KG (Leverkusen, DE) |
| Blanc Fix^{®} | Titandioxid-Pigment | 17,0 | Sachtleben Chemie GmbH (Duisburg, DE) |

**Tabelle 2: Herstellen von 5 Lacken durch Dispergieren der folgenden Bestandteile in einem Dissolver bei 500 U/min:**

| **Stoff** | **Gew.Teile** | **Hersteller** |
|---|---|---|
| *UV-Polyurethan-Dispersion:* | 58,8 | |
| UV-PUR 1 | | Beispiel 1 |
| UV-PUR 2 | | Beispiel 2 |
| UV-PUR 3 | | Beispiel 3 |
| UV-PUR 4 = Bayhydrol^{®} UV VP LS 2317 (UV-härtende Polyurethandispersion, ca. 37%ig in Wasser, Gehalt an aktiven Wasserstoff aufweisenden Gruppen von 0,0 mmol/g) UV-PUR 5 = Bayhydrol^{®} UV VP LS 2280 (UV-härtende Polyurethandispersion, ca. 39%ig in Wasser, Gehalt an aktiven Wasserstoff aufweisenden Gruppen von 0,2 mmol/g) | | Bayer AG, Lev., DE |
| | | Bayer AG, Lev., DE |
| Butylglykol/Wasser 1:1 | 8,6 | |
| Acemat^{®} TS100 (Mattierungsmittel) | 0,5 | Degussa AG, Marl, DE |
| LancoWax^{®} TF 1778 (Dispergierhilfsmittel) | 0,5 | Langro-Chemie, Stuttgart, DE |
| Dehydran^{®} 1293 (Entschäumer) | 0,45 | Cognis GmbH & CoKG, Düsseldorf, DE |
| Irgacure^{®} 1700 (Photoinititiator) | 0,95 | Ciba- Spezialitäten GmbH, Lampertheim, DE |
| BYK^{®} 348 (Verlaufsadditiv) | 0,5 | BYK-Chemie GmbH, Wesel, DE |
| Tafigel^{®} PUR 50 (Verdicker) | 0,3 | Münzing-Chemie GmbH, Heilbronn, DE |
| Pigmentpaste | 29,4 | Tabelle 1 |

**Härter:** Bayhydur^{®} VP LS 2336, lösemittelfreies hydrophiliertes Polyisocyanat auf Basis Hexamethylendiisocyanat, NCO-Gehalt 16,2 Gew.-%, Viskosität 6800 mPas bei 23°C (Bayer AG, Leverkusen, DE)

Es wurden zwei Serien von Lacken appliziert. Die 1. Serie als Vergleich nur mit UVhärtenden PUR-Dispersionen als Bindemittel. Die 2. Serie erfingdungsgemäß zusätzlich mit 10 Gewichtsteilen des Härters. Mittels eines Handrakels wurden Filme von 150 µm Naßfilmstärke auf weiß folierte mitteldichte Faserplatten (MDF) appliziert. Es wurde 15 min bei 20°C und 45 min bei 50°C vorgetrocknet. Anschließend wurde auf einer UV-Härtungsanlage der Firma IST (Nürtingen, DE) mit einem Galliumdotierten UV-Strahler (Typ CK I) einer Leistung von 80 W/cm Lampenlänge bei einer Vorschubgeschwindigkeit von 2,5 m/min durch UV-Licht gehärtet. Die Lackoberflächen wurden sieben Tage nach der Härtung mit verschiedenen Chemikalien/färbenden Flüssigkeiten belastet und anschließend visuell auf Schädigung überprüft. Die Ergebnisse sind in den Tabellen 3 und 4 zusammengefasst:

**Tabelle 3: Serie 1 (nicht erfindungsgemäß)**

| | **UV-PUR 1** | **UV-PUR 2** | **UV-PUR 3** | **UV-PUR 4** | **UV-PUR 5** |
|---|---|---|---|---|---|
| Ethanol (6h) 50%ig | 4BL/2 | 4BL/2BL | 5/5 | 5/5 | 4BL/2BL |
| Wasser (16h) | 2BL/0 | 2BL/1BL | 2BL/0 | 2BL/2BL | 2BL/1BL |
| Rotwein (6h) | 4BL/4 | 3BL/3 | 4BL/4 | 4BL/4BL | 4BL/4BL |
| Kaffee (16h) | 4BL/4 | 3BL/3 | 4/4 | 4BL/4 | 4BL/4 |

**Tabelle 4: Serie 2 (erfindungsgemäß, zusätzlich 10 Gew.-Teile Härter)**

| | **UV-PUR 1** | **UV-PUR 2** | **UV-PUR 3** | **UV-PUR 4** | **UV-PUR 5** |
|---|---|---|---|---|---|
| Ethanol (6h) 50%ig | 1/0 | 3/2 | 2/0 | 2/1 | 2/0 |
| Wasser (16h) | 0/0 | 1/0 | 0/0 | 1BL/0 | 0/0 |
| Rotwein (6h) | 4/4 | 3/2 | 4/4 | 4/2 | 3/2 |
| Kaffee (16h) | 4/4 | 1/1 | 4/4 | 4/4 | 3/3 |

### Beurteilung :

Note 0 : in Ordnung, kein Befund
Note 6 : Prüffläche völlig zerstört
BL: Blasenbildung
Erste Note: Beurteilung sofort nach der Belastung
Zweite Note: 3 Tage nach der Belastung

### Beispiel 12:

### Verbesserung der Haftung auf Aluminiumfolie :

### Herstellung eines Klarlacks:

- 86,00 Gew.-Teile: Bayhydrol^{®} UV VP LS 2282 (UV-härtende Polyurethandispersion, ca. 39%ig in Wasser, Bayer AG, Leverkusen, DE), das Produkt besitzt einen Gehalt an aktiven Wasserstoff aufweisenden Gruppen von 0,0 mmol/g.
- 4,30 Gew.-Teile: Bayhydrol^{®} PR 340 (nichtfunktionelle aliphatische, anionische Polyester-Polyurethandispersion ca. 40%ig in Wasser, Bayer AG, Leverkusen, DE)
- 0,40 Gew.-Teile: BYK^{®} 348

- 0,80 Gew.-Teile: Irgacure^{®} 500
- 8,40 Gew.-Teile: Bayhydur^{®} VP LS 2336, (lösemittelfreies hydrophiliertes Polyisocyanat auf Basis Hexamethylendiisocyanat, NCO-Gehalt 16,2 Gew.%, Viskosität 6800 mPas bei 23°C, Bayer AG, Leverkusen, DE)

### Erfindungsgemäß:

Mittels eines Handrakels wurden Filme von 25 µm Nassfilmstärke auf Aluminium-folie appliziert. Es wurde 1 min bei 50°C vorgetrocknet. Anschließend wurde auf einer UV-Härtunganlage der Firma IST (Nürtingen, DE) mit einem Quecksilber-UV-Strahler (Typ CK) einer Leistung von 80 W/cm Lampenlänge bei einer Vorschubgeschwindigkeit von 5 m/min durch UV-Licht gehärtet. Die Lackoberflächen wurden sieben Tage nach der Härtung belastet und anschließend visuell auf Schädigung überprüft.

### Tests und Ergebnisse:

Hitzefestigkeit 1 Sekunde und 300°C : in Ordnung
Sterilisationsfestigkeit (40 min 125°C, Wasserbad pH-Wert 8,0): in Ordnung Trocken- und Nassfestigkeit: in Ordnung

### Vergleich (nicht erfindungsgemäß):

Die Prüfungen wurden ohne Zusatz des Härters Bayhydur^{®} VP LS 2336 wiederholt. Es wurde keine Sterilisationsfestigkeit und keine Nassfestigkeit gefunden, d.h. die Lackfilme lösten sich von der Aluminiumfolie.

### Beschichtungsmittel aus UV härtbaren Polyurethan-Dispersionen und wasserdispergierbaren blockierten Polyisocyanaten (A")

### Beispiel 13-15:

Die Zusammensetzungen der Beschichtungsmittel sind in den Tabellen 5-8 beschrieben. Die Bestimmung der mechanischen des Beschichtungsmittels erfolgt an freien Filmen die wie folgt hergestellt werden:
In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich. Zum Aufbringen der einzelnen Striche werden die Produkte (wässrige Formulierungen werden vorher durch Zugabe von Ammoniak/Polyacrylsäure auf eine Viskosität von 4500 mPa·s⁻¹ gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des 100 % Moduls, erfolgte nach DIN 53504 an Filmen von 100 bis 200 µm Stärke.

Die Filmlagerung unter Hydrolysebedingungen erfolgt gemäß DIN EN 12280-3. Die Bestimmung der Mechanik dieser Filmproben wird nach 24 h Lagerung unter Normklimabedingungen (20°C und 65 % Luftfeuchtigkeit) gemäß DIN 53504 durchgeführt.

Die Ergebnisse der Prüfungen der mechanischen Eigenschaften der freien Filme belegen, dass mit dem oben angeführten Beschichtungsmittel je nach Trocknungsbedingungen die verschiedenen Vernetzungsmechanismen selektiv getrennt voneinander angesprochen werden können.

### 1. Bedingungen (Vergleich)

### • 45 Min bei 20°C trocknen

### • 10 Min bei 80°C trocknen

**Tabelle 5: 500 µm-Nassfilm auf Trennpapier appliziert**

| **zusammensetzung** | **Beispiel 13** | **Beispiel 14** | **Beispiel 15** |
|---|---|---|---|
| **UV**-**PUR Dispersion** | | | |
| | | | |
| Beispiel 4 [g] | 360,0 | | |
| Beispiel 5 [g] | | 360,0 | |
| Beispiel 6 [g] | | | 360,0 |
| **Polyisocyanat A**" | | | |
| Beispiel 10 [g] | 40,0 | 40,0 | 40,0 |
| | | | |
| Irgacure^{®} 500 [g] | 2,8 | 3,0 | 3,0 |
| Mischungsverhältnis | 90:10 | 90:10 | 90:10 |
| nfA der Mischung [%] | 34,4 | 38 | 37,7 |
| Irgacure^{®} 500 bzgl. nfA | 2% | 2% | 2% |

| | **Herstellung der Pasten** | | |
|---|---|---|---|
| Mischung [g] | 200,0 | 200,0 | 200,0 |
| Ammoniak 25 %ig | 3 ml | 2 ml | 2 ml |
| Mirox^{®} AM, 1:1 in H₂O | 3 ml | 3,5 ml | 2 ml |

| | **Zugversuche an freien Filmen** | | |
|---|---|---|---|
| Modul 100 % [MPa} | 0,4 | 0,5 | 0,4 |
| Zugfestigkeit [MPa] | 0,5 | 0,6 | 0,6 |
| Reißdehnung [%] | 450 | 590 | 610 |
| **14d Hydrolyse** | zerlaufen | zerlaufen | zerlaufen |
| Zugfestigkeit [MPa] | | | |
| Reißdehnung [%] | | | |

| | | | |
|---|---|---|---|
| nfA = nicht flüchtiger Anteil Mirox^{®} AM = Verdicker (Stockhausen, Krefeld, DE) | | | |

### 2. Bedingungen (Vergleich)

- **45 Min bei 20°C trocknen**
- **10 Min bei 80°C trocknen**
- **30 Min bei 150°C trocknen**

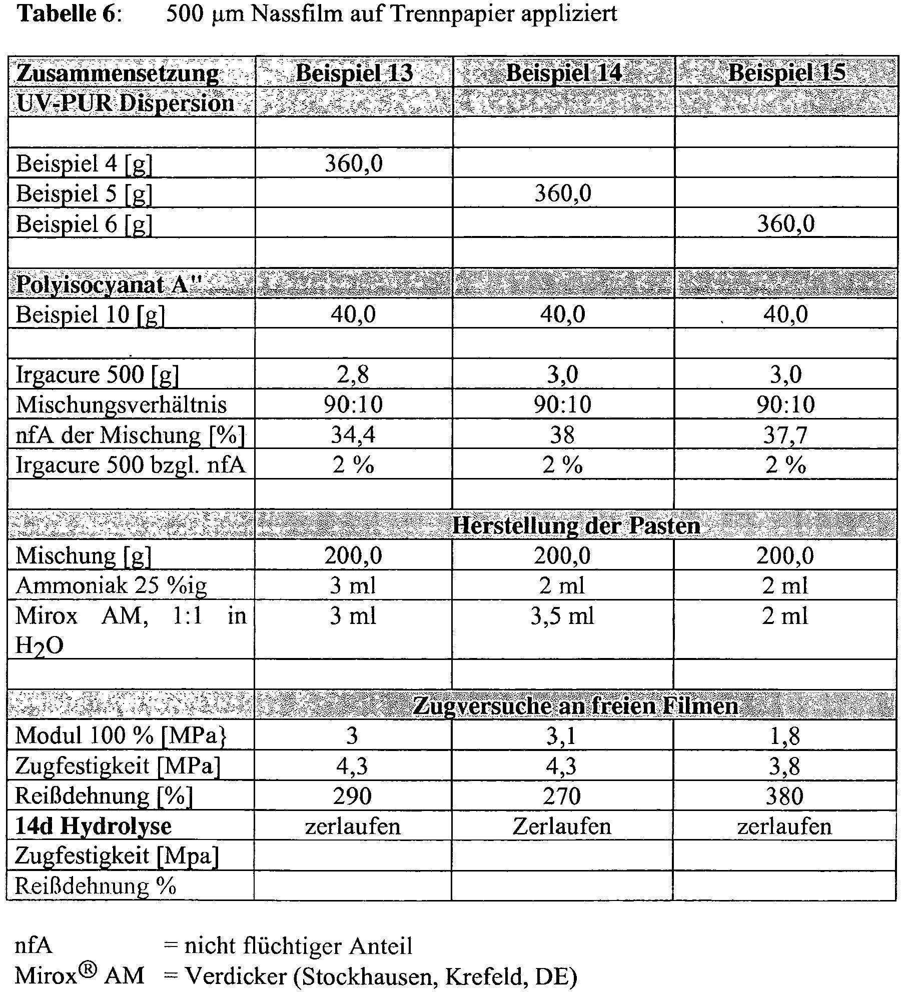

### 3. Bedingungen (Vergleich)

- **45 Min bei 20°C trocknen**
- **10 Min bei 80°C trocknen**
- **UV-Trocknung: 2,5 m/min 80 W/cm**

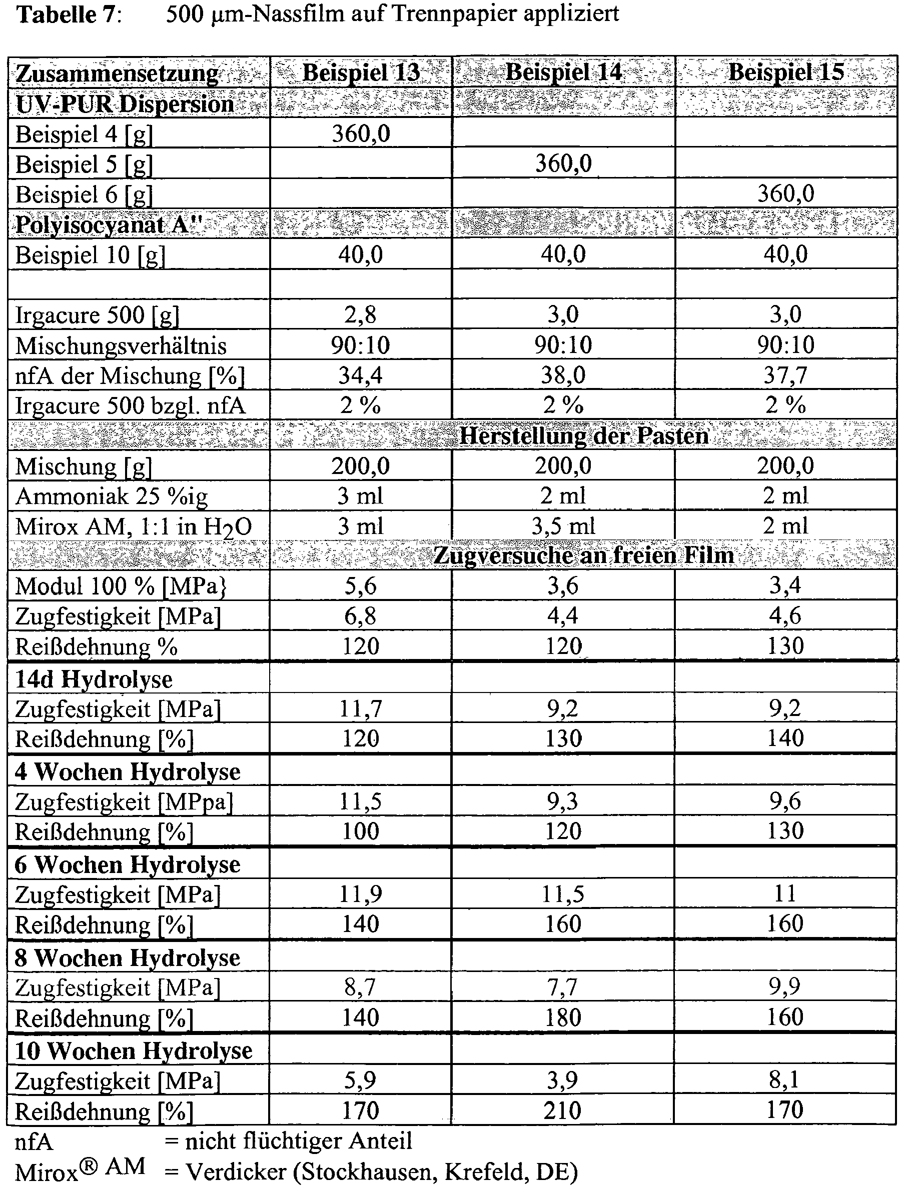

### 4. Bedingungen (erfindungsgemäß)

- **45 Min bei 20°C trocknen**
- **10 Min bei 80°C trocknen**
- **UV-Trocknung: 2,5 m/min 80 W/cm**
- **30 Min bei 150°C trocknen**

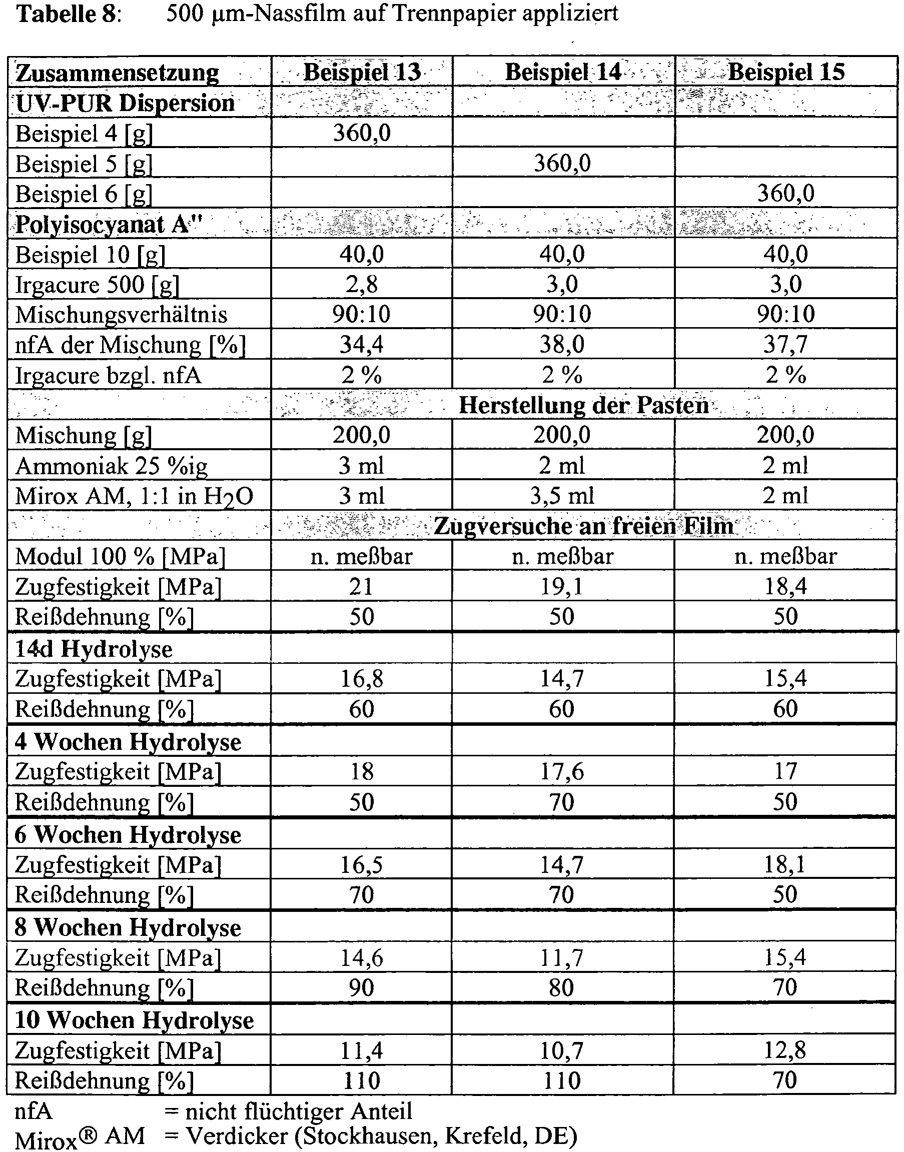

## Patentansprüche

1. Wässrige Beschichtungsmittel enthaltend
(I) mindestens ein Polyisocyanat (A), **dadurch gekennzeichnet, dass** das Polyisocyanat (A) ein unblockiertes, hydrophil modifiziertes Polyisocyanat (A') oder ein blockiertes Polyisocyanat (A") ist,
(II) mindestens eine radikalisch polymerisierbare Gruppen enthaltendes Polyurethan (B) mit einem Gehalt an Zerewitinoff-aktiven Wasserstoff-Atomen enthaltenden Gruppen von 0 bis 0,53 mmol/g, **dadurch gekennzeichnet, dass** das Polyurethan (B) ein Reaktionsprodukt aus
(a) einem oder mehreren Polyisocyanaten
(b1) einer oder mehrerer hydrophilierend wirkenden Verbindungen mit ionischen und/oder in ionische Gruppen überführbare Gruppen, ausgewählt aus der Gruppe bestehend aus Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und ihren Salzen, einem Additionsprodukt von Isophorondiamin (IPDA) und Acrylsäure und dessen Alkali- und/oder Ammoniumsalzen, dem Addukt von Natriumbisulfit an Buten-2-diol-1,4, Polyethersulfonat, dem propoxylierte Addukt aus 2-Butendiol und NaHSO₃, sowie in kationische Gruppen überführbaren Bausteinen wie N-Methyl-diethanolamin, und/oder nichtionischen Gruppen, wobei die nicht-ionisch hydrophilierend wirkenden Verbindungen Polyethergruppen und isocyanatreaktive Gruppen enthalten,
(b2) einer oder mehrerer Verbindungen mit radikalisch polymerisierbaren Gruppen,
(b3) gegebenenfalls einer oder mehrerer Polyolverbindungen mit einem mittleren Molekulargewicht von 50 bis 500 und einer Hydroxylfunktionalität größer oder gleich 2 und kleiner oder gleich 3,
(b4) gegebenenfalls einer oder mehrerer Polyolverbindungen mit einem mittleren Molekulargewicht von 500 bis 13000 g/mol mit einer mittleren Hydroxylfunktionalität von 1,5 bis 2,5 und
(b5) gegebenenfalls einem oder mehreren Di- oder Polyamine ist,
(III) einen Initiator (C), der eine radikalische Polymerisation auslösen kann.

2. Wässrige Beschichtungsmittel gemäß Anspruch 1, **dadurch gekennzeichnet, dass** Komponente (I) ein unblockiertes, hydrophil modifiziertes Polyisocyanat (A') ist.

3. Wässrige Beschichtungsmittel gemäß einem oder mehreren der Ansprüche 1 bis 2, **dadurch gekennzeichnet, dass** das Polyisocyanat (A') Polyisocyanate oder Polyisocyanatgemische mit Isocyanurat und/oder Biuretstruktur auf Basis von HDI, IPDI und/oder 4,4'-Diisocyanatodicyclohexylmethan ist.

4. Wässrige Beschichtungsmittel gemäß einem oder mehreren der Ansprüche 1 bis 3, **dadurch gekennzeichnet, dass** das Polyisocyanat (A') ein durch interne Emulgatoren hydrophiliertes Polyisocyanat ist.

5. Wässrige Beschichtungsmittel gemäß einem oder mehreren der Ansprüche 1 bis 4, **dadurch gekennzeichnet, dass** das Polyisocyanat (A') ein allophanathaltiges, Polyether-hydrophiliertes Polyisocyanat ist.

6. Wässrige Beschichtungsmittel gemäß einem oder mehreren der Ansprüche 1 bis 5, **dadurch gekennzeichnet, dass** das Polyisocyanat (A") ein wasserdispergierbares oder wasserlösliches blockiertes Polyisocyanat ist.

7. Wässrige Beschichtungsmittel gemäß einem oder mehreren der Ansprüche 1 bis 6, **dadurch gekennzeichnet, dass** der Initiator (C) ein durch Strahlung und/oder ein thermisch aktivierbare Initiator ist.

8. Verfahren zur Herstellung wässriger Beschichtungsmittel gemäß Anspruch 1, **dadurch gekennzeichnet, dass** die Bestandteile (I), (II) und (III) nacheinander in beliebiger Reihenfolge oder gleichzeitig miteinander vermischt werden.

9. Verwendung der wässrigen Beschichtungsmittel gemäß Anspruch 1 in Klebstoffen, Dichtmassen, Schlichten oder Lacken.

10. Verfahren zur Herstellung von Beschichtungen, **dadurch gekennzeichnet, dass** wässrige Beschichtungsmittel gemäß Anspruch 1 auf ein Substrat appliziert, das Wasser entfernt und anschließend gehärtet werden.

11. Verfahren zur Herstellung von Beschichtungen gemäß Anspruch 10, **dadurch gekennzeichnet, dass** Substrate ausgewählt sind aus der Gruppe Holz, Metall, Kunststoff, Papier, Leder, Textilien, Filz, Glas oder mineralische Untergründe.

12. Verfahren zur Herstellung von Beschichtungen gemäß Anspruch 10 oder 11, **dadurch gekennzeichnet, dass** Substrate Glas- oder Kohlefasern sind.

13. Verfahren zur Herstellung von Beschichtungen gemäß einem oder mehreren der Ansprüche 10 bis 12, **dadurch gekennzeichnet, dass** die Härtung durch Einwirkung energiereicher Strahlung erfolgt.

## Claims

1. Aqueous coating compositions comprising
(I) at least one polyisocyanate (A), **characterized in that** the polyisocyanate (A) is a non-blocked, hydrophilically modified polyisocyanate (A') or a blocked polyisocyanate (A"),
(II) at least one polyurethane (B) which contains free-radically polymerizable groups and from 0 to 0.53 mmol/g, of groups containing Zerevitinov-active hydrogen atoms, **characterized in that** the polyurethane (B) is a reaction product of
(a) one or more polyisocyanates
(b1) one or more hydrophilicizing compounds containing ionic groups and/or groups which can be converted into ionic groups, selected from the group consisting of mono- and dihydroxycarboxylic acids, mono- and diaminocarboxylic acids, mono- and dihydroxysulphonic acids, mono- and diaminosulphonic acids, mono- and dihydroxyphosphonic acids, mono- and diaminophosphonic acids and their salts, an adduct of isophoronediamine (IPDA) and acrylic acid and its alkali metal and/or ammonium salts, the adduct of sodium bisulphite with but-2-ene-1,4-diol, polyethersulphonate, the propoxylated adduct of 2-butenediol and NaHSO₃, and also units which can be converted into cationic groups, such as N-methyldiethanolamine, and/or non-ionic groups, the nonionically hydrophilizing compounds containing polyether groups and isocyanate-reactive groups,
(b2) one or more compounds containing free-radically polymerizable groups,
(b3) if desired, one or more polyol compounds having an average molecular weight of from 50 to 500, and a hydroxyl functionality of greater than or equal to 2 and less than or equal to 3,
(b4) if desired, one or more polyol compounds having an average molecular weight of from 500 to 13000 g/mol, with an average hydroxyl functionality of from 1.5 to 2.5, and
(b5) if desired, one or more di- or polyamines,
(III) an initiator (C) which is capable of initiating a free-radical polymerization.

2. Aqueous coating compositions according to Claim 1, **characterized in that** component (I) is a non-blocked, hydrophilically modified polyisocyanate (A').

3. Aqueous coating compositions according to one or more of Claims 1 to 2, **characterized in that** the polyisocyanate (A') is polyisocyanates or polyisocyanate mixtures with isocyanurate and/or biuret structure based on HDI, IPDI and/or 4,4'-diisocyanatodicyclohexylmethane.

4. Aqueous coating compositions according to one or more of Claims 1 to 3, **characterized in that** the polyisocyanate (A') is a polyisocyanate hydrophilicized by internal emulsifiers.

5. Aqueous coating compositions according to one or more of Claims 1 to 4, **characterized in that** the polyisocyanate (A') is an allophanate-containing, polyether-hydrophilicized polyisocyanate.

6. Aqueous coating compositions according to one or more of Claims 1 to 5, **characterized in that** the polyisocyanate (A") is a water-dispersible or water-soluble blocked polyisocyanate.

7. Aqueous coating compositions according to one or more of Claims 1 to 6, **characterized in that** the initiator (C) is a radiation-activable and/or heat-activable initiator.

8. Process for preparing aqueous coating compositions according to Claim 1, **characterized in that** the constituents (I), (II) and (III) are mixed with one another in succession in any order or simultaneously.

9. Use of the aqueous coating compositions according to Claim 1 in adhesives, sealants, sizes or paints.

10. Method of producing coatings, **characterized in that** aqueous coating compositions according to Claim 1 are applied to a substrate, the water is removed and the coatings are then cured.

11. Method of producing coatings according to Claim 10, **characterized in that** substrates are selected from the group consisting of wood, metal, plastic, paper, leather, textiles, felt, glass or mineral substrates.

12. Method of producing coatings according to Claim 10 or 11, **characterized in that** substrates are glass fibres or carbon fibres.

13. Method of producing coatings according to one or more of Claims 10 to 12, **characterized in that** curing is effected by exposure to high-energy radiation.

## Revendications

1. Agents de revêtement aqueux, contenant :
(I) au moins un polyisocyanate (A), **caractérisé en ce que** le polyisocyanate (A) est un polyisocyanate (A') non bloqué, modifié hydrophiliquement ou un polyisocyanate (A") bloqué,
(II) au moins un polyuréthane (B) contenant des groupes polymérisables par voie radicalaire, ayant une teneur en groupes contenant des atomes d'hydrogène actifs selon Zerewitinoff de 0 à 0,53 mmol/g, **caractérisé en ce que** le polyuréthane (B) est un produit de réaction de
(a) un ou plusieurs polyisocyanates,
(b1) un ou plusieurs composés à effet hydrophilisant contenant des groupes ioniques et/ou transformables en groupes ioniques, choisis dans le groupe constitué par les acides mono- et dihydroxycarboxyliques, les acides mono- et diaminocarboxyliques, les acides mono- et dihydroxysulfoniques, les acides mono- et diaminosulfoniques, les acides mono- et dihydroxyphosphoniques, les acides mono- et diaminophosphoniques et leurs sels, un produit d'addition d'isophorone-diamine (IPDA) et d'acide acrylique et ses sels d'alcalis et/ou d'ammonium, l'adduit de bisulfite de sodium sur du butène-2-diol-1,4, le polyéther-sulfonate, l'adduit propoxylé de 2-butènediol et de NaHSO₃, ainsi que les constituants transformables en groupes cationiques, tels que la N-méthyl-diéthanolamine, et/ou les groupes non ioniques, les composés à effet hydrophilisant non ioniques contenant des groupes polyéther et des groupes réactifs avec les isocyanates,
(b2) un ou plusieurs composés contenant des groupes polymérisables par voie radicalaire,
(b3) éventuellement un ou plusieurs composés de polyol ayant un poids moléculaire moyen de 50 à 500, et une fonctionnalité hydroxyle supérieure ou égale à 2 et inférieure ou égale à 3,
(b4) éventuellement un ou plusieurs composés de polyol ayant un poids moléculaire moyen de 500 à 13 000 g/mol, et une fonctionnalité hydroxyle moyenne de 1,5 à 2,5, et
(b5) éventuellement une ou plusieurs di- ou polyamines,
(III) un initiateur (C), qui peut déclencher une polymérisation radicalaire.

2. Agents de revêtement aqueux selon la revendication 1, **caractérisés en ce que** le composant (I) est un polyisocyanate (A') non bloqué, modifié hydrophiliquement.

3. Agents de revêtement aqueux selon une ou plusieurs des revendications 1 à 2, **caractérisés en ce que** le polyisocyanate (A') correspond à des polyisocyanates ou des mélanges de polyisocyanates avec de l'isocyanurate et/ou une structure biuret à base d'HDI, d'IPDI et/ou de 4,4'-diisocyanatodicyclohexylméthane.

4. Agents de revêtement aqueux selon une ou plusieurs des revendications 1 à 3, **caractérisés en ce que** le polyisocyanate (A') est un polyisocyanate hydrophilisé par des émulsifiants internes.

5. Agents de revêtement aqueux selon une ou plusieurs des revendications 1 à 4, **caractérisés en ce que** le polyisocyanate (A') est un polyisocyanate contenant un allophanate, hydrophilisé par un polyéther.

6. Agents de revêtement aqueux selon une ou plusieurs des revendications 1 à 5, **caractérisés en ce que** le polyisocyanate (A") est un polyisocyanate bloqué dispersible dans l'eau ou soluble dans l'eau.

7. Agents de revêtement aqueux selon une ou plusieurs des revendications 1 à 6, **caractérisés en ce que** l'initiateur (C) est un initiateur activable par un rayonnement et/ou thermiquement.

8. Procédé de fabrication d'agents de revêtement aqueux selon la revendication 1, **caractérisé en ce que** les constituants (I), (II) et (III) sont mélangés les uns avec les autres successivement dans un ordre quelconque ou simultanément.

9. Utilisation des agents de revêtement aqueux selon la revendication 1 dans des adhésifs, des matériaux d'étanchéité, des encollages ou des vernis.

10. Procédé de fabrication de revêtements, **caractérisé en ce que** des agents de revêtement aqueux selon la revendication 1 sont appliqués sur un substrat, l'eau est éliminé, puis ils sont durcis.

11. Procédé de fabrication de revêtements selon la revendication 10, **caractérisé en ce que** les substrats sont choisis dans le groupe constitué par le bois, le métal, le plastique, le papier, le cuir, les textiles, le feutre, le verre ou les substrats minéraux.

12. Procédé de fabrication de revêtements selon la revendication 10 ou 11, **caractérisé en ce que** les substrats sont des fibres de verre ou de carbone.

13. Procédé de fabrication de revêtements selon une ou plusieurs des revendications 10 à 12, **caractérisé en ce que** le durcissement a lieu par l'action d'un rayonnement riche en énergie.
